# EUROPEAN PATENT SPECIFICATION

(11) **EP 4 291 588 B1**
(45) Date of publication and mention of the grant of the patent: **20.08.2025**
(21) Application number: 22713523.3
(22) Date of filing: 07.02.2022
(51) Int. Cl.: C08G 18/10, C08G 18/32, C08G 18/48, C08G 18/76, C08L 75/08, B01J 20/28

(54) **REDUCTION OF MONOMERIC ISOCYANATES BY POROUS MATERIAL**
REDUKTION VON MONOMEREN ISOCYANATEN DURCH PORÖSES MATERIAL
RÉDUCTION D'ISOCYANATES MONOMÈRES PAR UN MATÉRIAU POREUX

(30) Priority: 11.02.2021 EP 21156620
(43) Date of publication of application: 20.12.2023
(73) Proprietor: BASF SE, 67056 Ludwigshafen am Rhein (DE)
(72) Inventor: HUFNAGEL, Martin, 49448 Lemfoerde (DE); LINNENBRINK, Martin, 49448 Lemfoerde (DE); ALBUERNE, Julio, 49448 Lemfoerde (DE); MATHIEU, Thomas, 49448 Lemfoerde (DE); GORDILLO BOLONIO, Alvaro, 08017 Barcelona (ES); LIESE, Julia, 49448 Lemfoerde (DE); MARX, Stefan, 67056 Ludwigshafen (DE); CLADE, Stefanie, 67056 Ludwigshafen (DE)
(74) Representative: BASF IP Association
(86) International application number: PCT/EP2022/052865
(87) International publication number: WO 2022/171564

(56) References cited:
- CN-A- 110 229 343
- US-A- 4 061 662
- ZANGO ZAKARIYYA UBA ET AL: "Removal of Pyrene from Aqueous Solution Using Fe-based Metal-organic Frameworks", IOP CONFERENCE SERIES: EARTH AND ENVIRONMENTAL SCIENCE, vol. 549, no. 1, 1 August 2020 (2020-08-01), pages 012061, XP055912509, ISSN: 1755-1307, Retrieved from the Internet <URL:https://iopscience.iop.org/article/10.1088/1755-1315/549/1/012061/pdf> [retrieved on 20220412], DOI: 10.1088/1755-1315/549/1/012061
- BING-JIAN YAO ET AL: "Post-Synthetic Polymerization of UiO-66-NH 2 Nanoparticles and Polyurethane Oligomer toward Stand-Alone Membranes for Dye Removal and Separation", CHEMISTRY - A EUROPEAN JOURNAL, vol. 22, no. 30, 15 June 2016 (2016-06-15), DE, pages 10565 - 10571, XP055674217, ISSN: 0947-6539, DOI: 10.1002/chem.201600817
- SERGIO J. GARIBAY ET AL: "Isoreticular synthesis and modification of frameworks with the UiO-66 topology", CHEMICAL COMMUNICATIONS, vol. 46, no. 41, 1 January 2010 (2010-01-01), pages 7700, XP055185546, ISSN: 1359-7345, DOI: 10.1039/c0cc02990d
- SMITH J.V. ET AL: "Hydroxyl Groups in Zeolite Catalysts", NATURE, 7 September 1968 (1968-09-07), pages 1040 - 1041, XP055825953, Retrieved from the Internet <URL:https://doi.org/10.1038/2191040a0> [retrieved on 20210720], DOI: 10.1038/2191040a0
- WITTMANN THOMAS ET AL: "Enhancing the Water Stability of Al-MIL-101-NH 2 via Postsynthetic Modification", CHEMISTRY - A EUROPEAN JOURNAL, vol. 21, no. 1, 28 October 2014 (2014-10-28), pages 314 - 323, XP055825728, ISSN: 0947-6539, DOI: 10.1002/chem.201404654

## Description

The present invention relates to a process for the reduction of the content of (removal of) residual monomeric isocyanate in a polyurethane prepolymer containing said residual monomeric isocyanate comprising the step of contacting the polyurethane prepolymer with a porous material having pores formed by a framework containing isocyanate reactive functional groups at a temperature allowing chemical reaction of the reactive functional groups with the residual monomeric isocyanate in at least a fraction of the pores in order to covalently bind the reacted isocyanate, wherein the porous material is a porous metal-organic framework material comprising at least one metal ion and at least one at least bidentate organic compound, which is coordinately bound to said metal ion, wherein the polyurethane prepolymer is liquid with a viscosity in the range from 0.1 to 10⁷ mPas, determined with a Haake-Mars rheometer with plate-plate geometry in rotation and 1 mm gap width at a shear rate of 10 and 40 s-1 at the temperature and wherein the ratio (w:w) of polyurethane prepolymer to porous material is in the range of from 100:0.1 to 100:50.

Polyurethane prepolymers based on the reaction of polyisocyanates and polyols typically possess a given amount of monomeric isocyanates. These prepolymers in general are used for manifold applications e.g. foamed and compact elastomers, sealants, coatings and adhesives in 1-component and 2-component formulations.

The hazardous nature of monomeric isocyanates leads to a severe increase of regulatory restrictions from governmental institutions. In 2018 the ECHA suggested to tighten the restrictions of use for diisocyanates significantly. E.g. for industrial use, the handling of products with residual monomeric isocyanates will require extensive safety trainings and additional technical measures to keep isocyanate levels in air low. Further, any private use of isocyanate based products in do-it-yourself applications like sealants or can foams is already to date restricted and further limitations are expected. To minimize the hazardous potential of these products, a limit of 0.1 wt.-% of monomeric isocyanate was defined ("monomer free"). Products with contents below 0.1 wt.-% of aromatic or aliphatic isocyanate enable easy and safe handling of the monomer-free products both for industrial and private users.

One approach to obtain low monomeric isocyanate content is known in the art by designing an appropriate chemical protocol for the synthesis of the polyurethane prepolymer.

EP 2 155 797 B1 describes a process for the production of isocyanate prepolymers based on toluene diisocyanate having a content of free monomeric toluene diisocyanate content of not more than 0.1 wt.-% using polyether polyols, wherein a certain index based on the hydroxyl number of the polyether is not exceeded.

EP 951 493 B1 describes a low-monomer polyurethane prepolymer containing free isocyanate groups obtained by reacting one or more polyhydric alcohols and two or more diisocyanates, wherein a ratio of a total number of first and second isocyanate groups of non-symmetrical diisocyanate to a number of isocyanate groups of a second diisocyanate is greater than 6:1.

EP 150 444 B1 describes a process for the production of isocyanate-terminated polyurethane prepolymers based on diisocyanates of different reactivity, wherein in a first reaction step carried out in the absence of other diisocyanates, 2,4-tolylene diisocyanate is reacted and in a second reaction step, a symmetrical, dicyclic diisocyanate which is more reactive by comparison with the less reactive isocyanate groups of the 2,4-tolylene diisocyanate used in the first reaction step is added.

However this approach has the drawbacks that it contains many steps causing high costs and a very high level of reaction control is required.

A further approach to reduce monomeric isocyanate content is the distillation of the prepolymer.

WO 03/046 040 A1 describes a process for the preparation of prepolymers comprising isocyanate and urethane groups, comprising the step of removing monomeric diisocyanates by distilling the reaction product from step a) by means of a short-path evaporator.

EP 1 241 197 A1 describes a method for forming an isocyanate-functional prepolymer having a low residual isocyanate content by passing the reaction mixture comprising prepolymer and unreacted isocyanate through a short-path evaporator to remove unreacted isocyanate to a level of less than 0.15% by weight.

DE 199 39 840 A1 describes a process for producing prepolymers which contain isocyanate terminal groups, wherein the reaction mixture is subsequently subjected to distillation, optionally with the addition of an entraining agent.

However, this approach has the drawback that an expensive distillation setup is required and that it can only be used for prepolymers that are stable under the distillation conditions and show low viscosities.

A further approach uses adsorbent material in order to remove residual monomeric isocyanate.

US 4,061,662 describes a method of reducing residual unreacted tolylene diisocyanate content in a prepolymer reaction product of toluene diisocyanate with a polyoxyalkylene polyol comprising allowing said prepolymer to flow through a column packed with absorbent type X zeolite molecular sieves. However, the additional separation step results in an increased operating expense as described above for the distillation approach and the effectiveness is limited due to the high amount of zeolite that is needed. A further drawback of this and the distillation approach is that the amount of material is reduced due to the removal of the monomeric isocyanates.

EP 2 439 220 A1 describes a carrier material which has functional groups on its surface which are reactive towards isocyanate groups, for reducing the proportion of isocyanate-containing monomers in compositions containing at least one isocyanate-containing polyurethane polymer and at least one isocyanate-containing monomer. This is accomplished by surface derivatization of amorphous silica by amino groups. However surface modification results in a limited active surface compared to the silica particles and is non-selective as not only residual monomeric isocyanates can react with the amino functions on the surface but also other amino-reactive components of the polymer, including terminal isocyanate functional groups of the polymer itself as well as other oligo- and polymeric isocyanates. The huge drawback of this approach is the tremendous increase in viscosity after contacting theses functionalized silica with isocyanate containing prepolymers.

International patent application with application N° PCT/EP2020/079866 describes the removal of residual monomeric aliphatic isocyanate from a reaction mixture comprising aliphatic polyisocyanate using a scavenger comprising a zeolitic material.

Thus, an object of the present invention is to provide a process overcoming the above disadvantages.

The object is achieved by a process for the reduction of the content of (removal of) residual monomeric isocyanate in a polyurethane prepolymer containing said residual monomeric isocyanate comprising the step of
(i) contacting the polyurethane prepolymer with a porous material having pores formed by a framework containing isocyanate reactive functional groups at a temperature allowing chemical reaction of the reactive functional groups with the residual monomeric isocyanate in at least a fraction of the pores in order to covalently bind the reacted isocyanate, wherein the porous material is a porous metal-organic framework material comprising at least one metal ion and at least one at least bidentate organic compound, which is coordinately bound to said metal ion, wherein the polyurethane prepolymer is liquid with a viscosity in the range from 0.1 to 10⁷ mPas, determined with a Haake-Mars rheometer with plate-plate geometry in rotation and 1 mm gap width at a shear rate of 10 and 40 s-1 at the temperature and wherein the ratio (w:w) of polyurethane prepolymer to porous material is in the range of from 100:0.1 to 100:50.

Surprisingly, it was found that the use of a porous metal-organic framework (MOF) material having pores formed by a framework containing isocyanate reactive functional groups at a temperature allowing chemical reaction of the reactive functional groups with the residual monomeric isocyanate in at least a fraction of the pores in order to covalently bind the reacted isocyanate, especially Basolite A 120 results in a substantially improved ability to capture the free monomer from TDI and MDI prepolymers. The functional group within the pores of the porous material allows a selective reaction with monomeric isocyanate compared to oligomeric or polymeric isocyanate comprising substances. To remove the monomeric isocyanates, the prepolymer can -by way of example- be simply mixed with the porous material, annealed at 60 °C for 1-2 hours and kept at room temperature for 24 hours. The combination of the porous material that has an intrinsic size selectivity towards polymeric and monomeric components together with reactive groups inside the pores turned out to be the most efficient absorbent for monomer removal in isocyanate prepolymers. Further benefit is the moderate viscosity increase of the prepolymers containing the porous material, especially Basolite A 120, which is significantly lower than for the amino-functional fumed silicas.

Polyurethane prepolymers prepared from monomeric isocyanate are known in the art. In view of the selectivity of the porous material isocyanate groups containing polyurethane prepolymers are suitable.

The polyurethane prepolymers can be prepared by reaction of polyisocyanates with compounds having at least two isocyanate-reactive hydrogen atoms.

Suitable polyisocyanates include, for example, aliphatic, cycloaliphatic, aromatic and particularly aromatic diisocyanates. The following are specifically named by way of example: aliphatic diisocyanates, such as hexamethylene 1,6-diisocyanate, 2-methylpentamethylene 1,5-diisocyanate, 2-ethylbutylene 1,4-diisocyanate or mixtures of at least two of said C₆-alkylene diisocyanates, pentamethylene 1,5-diisocyanate and butylene 1,4-diisocyanate, cycloaliphatic diisocyanates, such as 1-isocyanato-3,3,5-trimethyl-5-isocyanatomethylcyclohexane (isophorone diisocyanate), 1,4-cyclohexane diisocyanate, 1-methyl-2,4- and -2,6-cyclohexane diisocyanate, as well as the corresponding isomer mixtures, 4,4'-, 2,4'- and 2,2'-dicyclo-hexylmethane diisocyanate, as well as the corresponding isomer mixtures and preferably aromatic diisocyanates, such as 1,5-naphthylene diisocyanate (1,5-NDI), 2,4- and 2,6-tolylene diisocyanate (TDI) as well as their mixtures, 2,4'-, 2,2'-, and preferably 4,4'-diphenylmethane diisocyanate (MDI) as well as mixtures of at least two of these isomers, having two or more aromatic systems. Suitable isocyanate components can also include derivatives of said isocyanates, such as uretdione, urea, biuret or isocyanurate and mixtures thereof.

According to the process of the present invention said polyisocyanates represent residual monomeric isocyanate to be removed in the polyurethane prepolymer. The term "removal" means according to the present invention any reduction of the content of residual monomeric isocyanate resulting from the contacting with the porous material. Preferably, the content of residual isocyanate in the prepolymer according to the present invention is at most 0.1 wt.-% (percent by weight) based on the total weight of the prepolymer. The content of residual monomeric isocyanate is preferably determined by using high performance liquid chromatography (HPLC) with UV detection of samples derivatized with 1-(2-Piridlyl)piperazine.

In general polyisocyanates used in the preparation of the polyurethane prepolymer may have a molecular weight of less than 500 g/mol, preferably less than 400 g/mol, even more preferably less than 300 g/mol. The prefix "poly" in the term polyisocyanate refers to the fact that the isocyanate has at least two isocyanate groups and does not refer to a polymeric nature in weight. The polyisocyanates represent monomers and thus are not oligomers or polymers.

Accordingly, the residual monomeric isocyanate is preferably an aromatic or aliphatic isocyanate. Thus, in one embodiment of the present invention the residual monomeric isocyanate is an aromatic isocyanate. In another embodiment of the invention the residual monomer is an aliphatic isocyanate. In an additional embodiment of the invention the residual monomer is a mixture of aliphatic and aromatic monomeric isocyanates.

A preferred residual monomeric isocyanate is MDI in isomeric pure form or as mixture of 2,2'-MDI, 4,4'-MDI and 2,4'-MDI. Another preferred residual monomeric isocyanate is TDI in isomeric pure form or as mixture of 2,4-TDI and 2,6-TDI.

Suitable compounds having at least two isocyanate-reactive hydrogen atoms preferably have at least two hydroxyl and/or amino groups in the molecule. Particularly suitable compounds have a molecular weight Mn in the range from 60 to 10 000 g/mol. The compounds having at least two isocyanate-reactive hydrogen atoms are particularly preferably selected from the group consisting of polyfunctional alcohols, polyetheralcohols, polyesteralcohols, polyetherpolyamines, hydroxyl-containing polycarbonates, hydroxyl-containing polyacetals and any mixtures of at least two thereof. Polyfunctional alcohols and polyether-alcohols, as well as mixtures thereof, are particularly preferred.

Examples of suitable polyfunctional alcohols are alkanediols having from 2 to 10, preferably from 2 to 6 carbon atoms, as well as higher alcohols, such as glycerol, trimethylolpropane or pentaerythritol. Furthermore, natural polyols can be used, such as castor oil.

The polyetheralcohols are preferably from di- to octafunctional. Their preparation is usually carried out by addition of alkylene oxides, in particular ethylene oxide and/or propylene oxide, to H-functional starters. The alkylene oxides can be used individually, in sequence or as a mixture. Possible starters include, for example, water, diols, triols, alcohols of higher functionality, sugar alcohols, aliphatic or aromatic amines or aminoalcohols.

Polyetheralcohols having an average molecular weight in the range from 500 to 10 000 g/mol and an average OH-functionality in the range from 2 to 6 are particularly suitable. Particularly preferred starters for the preparation of these polyetheralcohols are propylene glycol and glycerol. Preferred alkylene oxides are ethylene oxide and propylene oxide.

Polyesteralcohols having average molecular weights in the range from 1 000 to 10 000 g/mol and an average OH-functionality in the range from 2 to 3 are also preferred. Polyesteralcohols-based on adipic acid are particularly preferred. The preparation of the prepolymers is carried out, as explained, by reaction of the polyisocyanates with the compounds having at least two isocyanate-reactive hydrogen atoms.

Suitable catalysts, which in particular speed the reaction between the isocyanate groups of the polyisocyanates and the hydroxyl groups of the polyalcohols, include the known and conventional strongly basic amines and also organic metal compounds such as titanic esters, iron compounds such as iron(III) acetylacetonate, tin compounds, e.g. tin(II) salts of organic carboxylic acids, or the dialkyltin(IV) salts of organic carboxylic acids or mixtures of at least two of the named catalysts, bismuth salts of organic carboxylic acids as well as synergistic combinations of strongly basic amines and organic metal compounds. The catalysts can be used in the usual quantities, for example from 0.002 to 5% by weight, based on the polyalcohols.

The reaction can be carried out continuously or batchwise in the usual reactors, for example the known tubular or stirred-tank reactors, preferably in the presence of the usual catalysts, which speed the reaction of the OH-functional compounds with isocyanate groups, with or without inert solvents, i.e. compounds that do not react with the isocyanates and OH-functional compounds.

For instance, a polyurethane prepolymer was prepared by reacting toluene diisocyanate (TDI) with a ratio of 2,4-TDI:2,6-TDI=80:20 with poly(tetramethylene ether glycol) with an OH value of 112 mg KOH/g in the presence of diglycol-bis-chloroformiat (DIBIS). The prepolymer has an NCO content of 6.09%, free monomer content was 0.4% 2,4-TDI and 2.1% 2,6-TDI and a viscosity of 11.4 Pas at 25 °C.

Another exemplary polyurethane prepolymer was prepared by reacting methylene diphenyl diisocyanate (MDI) with a ratio of 4,4'-MDI:2,4'-MDI: 2,2'-MDI=1:1:0.05 with poly(propylene glycol) with an OH value of 104 mg KOH/g in the presence of Diglycol-bis-chloroformiat (DIBIS). The prepolymer has an NCO content of 5.27%, free monomer content of 2.1% 4,4'-MDI, 4.7% 2,4'-MDI and 0.4% 2,2'-MDI and a viscosity of 2,8 Pas at 60 °C.

The prepolymers are customarily used in the preparation of polyurethanes. To this end, the prepolymers are reacted with compounds that can react with isocyanate groups. The compounds that can react with isocyanate groups include, for example, water, alcohols, amines or compounds having mercapto groups. The polyurethanes can be used as foams, coatings, adhesives, in particular melt-applied adhesives, paints, as well as compact or cellular elastomers.

The polyurethane prepolymer is contacted with a porous MOF material. Said porous MOF material has pores formed by a framework. Within the pores the framework contains isocyanate reactive functional groups capable of allowing chemical reaction of the reactive functional groups with the residual monomeric isocyanate in at least a fraction of the pores in order to covalently bind the reacted isocyanate. The covalently binding results in reduction of residual monomeric isocyanate content.

The porous MOF material has pores, wherein the mean pore size of the porous material before contacting, i.e. before reaction with residual monomeric isocyanate, is preferably in the range from 0.3 to 9.0 nm. More preferably, the range is from 0.5 to 5.0 nm, even more preferably from 1.0 to 2.5 nm, even more from 1.5 to 2.2 nm, according to DIN ISO 9277:2014-01 (Determination of the specific surface area of solids by gas adsorption - BET method).

Preferably, the porous MOF material has before the contacting a total pore volume in the range from 0.04 to 4.0 cm³/g. More preferably, the range is from 0.4 to 2.0, even more preferably 1.0 to 1.8 cm³/g, according to DIN ISO 9277:2014-01 (Determination of the specific surface area of solids by gas adsorption - BET method).

Preferably, the porous MOF material has before the contacting a specific surface area BET from 10 to 5700 m²/g, more preferably from 150 to 5700 m²/g. More preferably, the range is from 300 to 4500 m²/g, even more preferably, from 400 to 4500 m²/g, even more preferably from 1000 to 3300 m²/g. according to DIN ISO 9277:2014-01 (Determination of the specific surface area of solids by gas adsorption - BET method).

The isocyanate reactive functional groups are preferably amino, hydroxyl, thiol, epoxy or a mixture of two or more of these groups, preferably amino groups, more preferably primary amino groups.

Examples for the at least bidentate organic compound functionalized with one or more amino groups are for example aspartic acid, glutamic acid, arginine, histidine, proline, tryptophane, amino-fumaric acid, amino-maleic acid, amino-tartaric acid, amino-muconic acid, amino-hydroxy-1,4-benzenedicarboxylic acid, amino-dihydroxy-1,4-benzenedicarboxylic acid, amino-imidazole, amino-pyrazole, amino-1,4-butanedicarboxylic acid, amino-1,4-butenedicarboxylic acid, amino-1,6-hexanedicarboxylic acid, amino-decanedicarboxylic acid, amino-1,8-heptadecanedicarboxylic acid, amino-1,9-heptadecanedicarboxylic acid, amino-heptadecanedicarboxylic acid, amino-1,2-benzenedicarboxylic acid, amino-1,3-benzenedicarboxylic acid, amino-2,3-pyridinedicarboxylic acid, amino-pyridine-2,3-dicarboxylic acid, amino-1,3-butadiene-1,4-dicarboxylic acid, amino-1,4-benzenedicarboxylic acid, amino-p-benzenedicarboxylic acid, amino-imidazole-2,4-dicarboxylic acid, 4,4'-diaminophenylmethane-3,3'-dicarboxylic acid, amino-pyridine-2,6-dicarboxylic acid, amino-thiophene-3,4-dicarboxylic acid, amino-perylene-3,9-dicarboxylic acid, amino-perylenedicarboxylic acid, amino-3,6-dioxaoctanedicarboxylic acid, amino-3,5-cyclohexadiene-1,2-dicarboxylic acid, amino-octadicarboxylic acid, amino-pentane-3,3-carboxylic acid, amino-1,1'-dinaphthyldicarboxylic acid, amino-phenylindanedicarboxylic acid, amino-1,4-cyclohexanedicarboxylic acid, amino-naphthalene-1,8-dicarboxylic acid, amino-2,-benzoylbenzene-1,3-dicarboxylic acid, amino-1,4-naphthalenedicarboxylic acid, amino-2,6-naphthalenedicarboxylic acid, amino-1,3-adamantanedicarboxylic acid, amino-1,8-naphthalenedicarboxylic acid, amino-2,3-naphthalenedicarboxylic acid, amino-8-methoxy-2,3-naphthalenedicarboxylic acid, amino-8-nitro-2,3-naphthalenecarboxylic acid, amino-8-sulfo-2,3-naphthalenedicarboxylic acid, amino-anthracene-2,3-dicarboxylic acid, amino-imidazole-4,5-dicarboxylic acid, amino-4-cyclohexene-1,2-dicarboxylic acid, amino-tetradecanedicarboxylic acid, amino-1,7-heptadicarboxylic acid, amino-5-hydroxy-1,3-benzenedicarboxylic acid, amino-2,5-dihydroxy-1,4-dicarboxylic acid, amino-pyrazine-2,3-dicarboxylic acid, amino-furan-2,5-dicarboxylic acid, amino-2,5-pyridinedicarboxylic acid, amino-cyclohexene-2,3-dicarboxylic acid, amino-1,3-benzenedicarboxylic acid, amino- 2,6-pyridinedicarboxylic acid, amino-anthraquinone-1,5-dicarboxylic acid, amino-3,5-pyrazoledicarboxylic acid, amino-2-nitrobenzene-1,4-dicarboxylic acid, amino-heptane-1,7-dicarboxylic acid, amino-cyclobutane-1,1-dicarboxylic acid, amino-1,14-tetradecanedicarboxylic acid, amino-5,-6-dehydronorbornane-2,3-dicarboxylic acid, amino-5-ethyl-2,3-pyridinedicarboxylic acid or amino-camphordicarboxylic acid.

For example, the at least bidentate organic compound can be derived from a tricarboxylic acid that already has at least one isocyanate reactive functional group or that can serve as starting material for the preparation of a tricarboxylic acid by derivatization. Examples of tricarboxylic acids are amino-2-hydroxy-1,2,3-propanetricarboxylic acid, amino-1,2,3-, amino-1,2,4-benzenetricarboxylic acid, amino-1,2,4-butanetricarboxylic acid, amino-1,3,5-benzenetricarboxylic acid, amino-1-hydroxy-1,2,3-propanetricarboxylic acid, amino-benzene-trisbenzoic acid.

Examples of an at least bidentate organic compound derived from a tetracarboxylic acid that can serve as starting material for the preparation of a tetracarboxylic acid by derivatization, are amino-1,2,4,5-benzenetetracarboxylic acid, amino-1,2,5,6-hexanetetracarboxylic acid, amino-1,2,7,8-octanetetracarboxylic acid, amino-1,4,5,8-naphthalenetetracarboxylic acid, amino-1,2,9,10-decanetetracarboxylic acid, amino-benzophenonetetracarboxylic acid, amino-3,3',4,4'-benzophenonetetracarboxylic acid.

The polyurethane prepolymer is liquid at a temperature allowing the chemical reaction. As mentioned above the viscosity of a prepolymer can be influenced by the polyisocyanate as starting material and residual monomeric isocyanate. Further viscosity influencing factors are known by the practitioner in the art. Within the meaning of the present invention the term "liquid" is used in case the viscosity is in the range from 0.1 to 10⁷ mPas. The viscosity is determined with a Haake-Mars rheometer with plate-plate geometry in rotation and 1 mm gap width at a shear rate of 10 and 40 s⁻¹ at the given temperature.

The ratio (w/w) polyurethane prepolymer to porous material is in the range of from 100:0.1 to 100:50, preferably from 100:0.1 to 100:20, more preferably from 100:0.1 to 100:10, even more preferably from 100:0.1 to 100:5.

Preferably, the residual monomer isocyanate content of the polyurethane prepolymer is reduced by at least 50 %, more preferably by at least 90%, even more preferably by at least 95%, even more preferably by at least 99 % in step (i).

The isocyanate reactive functional groups contained in the pores of the porous material can be introduced by using a porous material without said groups and subsequently derivatization of the porous material in order to introduce the functional groups. Additionally, the reactive functional groups may be present as a part of one or more framework forming component. The latter is preferred.

It is preferred that the porous metal-organic framework material comprising the at least one metal ion and the at least one at least bidentate organic compound, which is coordinately bound to said metal ion is prepared by contacting the at least one metal ion with the at least one at least bidentate organic compound, wherein the at least one at least bidentate organic compound already contains the isocyanate reactive functional groups.

Thus, metal-organic framework material is preferably used, wherein the at least one at least bidentate organic compound already comprises isocyanate reactive functional groups or wherein the at least one at least bidentate organic compound, already known as starting material for the preparation of metal-organic framework material, can be derivatized in order to introduce isocyanate one or more reactive functional groups. By way of example dicarboxylic acids are known to form metal-organic frameworks with metal ion. Such a dicarboxylic acid can be derivatized by introducing an amino group in order to provide an at least bidentate organic compound in order to form a framework with pores having amino groups therein.

Such metal-organic frameworks (MOFs) are known in the prior art and are described, for example, in US 5,648,508, EP-A-0 790 253, M. O'Keeffe et al., J. Sol. State Chem., 152 (2000), pages 3 to 20, H. Li et al., Nature 402, (1999), page 276, M. Eddaoudi et al., Topics in Catalysis 9, (1999), pages 105 to 111, B. Chen et al., Science 291, (2001), pages 1021 to 1023, DE-A 101 11 230, DE-A 10 2005 053430, WO-A 2007/054581, WO-A 2005/049892 and WO-A 2007/023134.

The metal-organic frameworks comprise pores, in particular micropores and/or mesopores. Micropores are defined as pores having a diameter of 2 nm or less and mesopores are defined by a diameter in the range from 2 to 50 nm, in each case in accordance with the definition given in Pure & Applied Chem. 57 (1985), 603 - 619, in particular on page 606. The presence of micropores and/or mesopores can be checked by means of sorption measurements, with these measurements determining the uptake capacity of the MOF for nitrogen at 77 Kelvin in accordance with DIN ISO 9277:2014-01.

The specific surface area, calculated according to the Langmuir model of an MOF in powder form is preferably more than 100 m²/g, more preferably above 300 m²/g, more preferably more than 700 m²/g, even more preferably more than 800 m²/g, even more preferably more than 1000 m²/g and particularly preferably more than 1200 m²/g.

Shaped bodies comprising metal-organic frameworks can have a lower active surface area; but preferably more than 150 m²/g, more preferably more than 300 m²/g, even more preferably more than 700 m²/g.

The metal component in the framework according to the present invention is preferably selected from groups la, Ila, IIIa, IVa to Villa and Ib to VIb. Particular preference is given to Mg, Ca, Sr, Ba, Sc, Y, Ln, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Ti, Si, Ge, Sn, Pb, As, Sb and Bi, where Ln represents the lanthanides.

Lanthanides are La, Ce, Pr, Nd, Pm, Sm, En, Gd, Tb, Dy, Ho, Er, Tm, Yb.

With regard to the ions of these elements, particular mention may be made of Mg²⁺, Ca²⁺, Sr²⁺, Ba²⁺, Sc³⁺, Y³⁺, Ln³⁺, Ti⁴⁺, Zr⁴⁺, Hf⁴⁺, V⁴⁺, V³⁺, V²⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺, Os³⁺, Os²⁺, Co³⁺, Co²⁺, Rh²⁺, Rh⁺, Ir²⁺, Ir⁺, Ni²⁺, Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺, Ga³⁺, In³⁺, Tl³⁺, Si⁴⁺, Si²⁺, Ge⁴⁺, Ge²⁺, Sn⁴⁺, Sn²⁺, Pb⁴⁺, Pb²⁺, As⁵⁺, As³⁺, As⁺, Sb⁵⁺, Sb³⁺, Sb⁺, Bi⁵⁺, Bi³⁺ and Bi⁺.

Preferred metals are Mg, Ca, Sr, Ba, Sc, Y, Ln, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Ti, Si, Ge, Sn, Pb, As, Sb, Bi, and mixtures thereof ND wherein Ln represents a lanthanide, preferably Mg, Al, Y, Sc, Zr, Ti, V, Cr, Mo, Fe, Co, Cu, Ni, Zn, Ln, even more preferably Al, Mg, Fe, Cu and Zn, even more preferably Mg and Al, even more preferably Al.

The term "at least bidentate organic compound" refers to an organic compound which comprises at least one functional group which is able to form at least two coordinate bonds to a given metal ion and/or a coordinate bond to each of two or more, preferably two, metal atoms.

As functional groups via which the coordinate bonds mentioned can be formed, particular mention may be made of, for example, the following functional groups -CO₂H, -CS₂H, -NO₂, -B(OH)₂, -SO₃H, -Si(OH)₃, -Ge(OH)₃, -Sn(OH)₃, -Si(SH)₄, -Ge(SH)₄, -Sn(SH)₃, -PO₃H, -AsO₃H, -AsO₄H, -P(SH)₃, -As(SH)₃, -CH(RSH)₂, -C(RSH)₃, -CH(RNH₂)₂, -C(RNH₂)₃, -CH(ROH)₂, -CH(RCN)₂, -C(RCH)₃, where R is, for example, preferably an alkylene group having 1, 2, 3, 4 or 5 carbon atoms, for example a methylene, ethylene, n-propylene, i-propylene, n-butylene, i-butylene, tert-butylene or n-pentylene group, or an aryl group comprising 1 or 2 aromatic rings, for example 2 C₆ rings, which may, if appropriate, be fused and may be independently substituted by at least one substituent in each case and/or may comprise, independently of one another, at least one heteroatom such as N, O and/or S. In likewise preferred embodiments, functional groups in which the abovementioned radical R is not present are possible. Such groups are, inter alia, CH(SH)₂, -C(SH)₃, -CH(NH₂)₂, -C(NH₂)₃, -CH(OH)₂, -C(OH)₃, -CH(CN)₂ or C(CN)₃.

However, the functional groups can also be heteroatoms of a heterocycle. Particular mention may here be made of nitrogen atoms.

The at least two functional groups can in principle be any suitable organic compound, as long as it is ensured that the organic compound in which these functional groups are present is capable of forming the coordinate bond and of producing the framework.

The organic compounds which comprise the at least two functional groups are preferably derived from a saturated or unsaturated aliphatic compound or an aromatic compound or a both aliphatic and aromatic compound.

The aliphatic compound or the aliphatic part of the both aliphatic and aromatic compound can be linear and/or branched and/or cyclic, with a plurality of rings per compound also being possible. More preferably, the aliphatic compound or the aliphatic part of the both aliphatic and aromatic compound comprises from 1 to 15, more preferably from 1 to 14, more preferably from 1 to 13, more preferably from 1 to 12, more preferably from 1 to 11 and particularly preferably from 1 to 10, carbon atoms, for example 1, 2, 3, 4, 5, 6, 7, 8, 9 or 10 carbon atoms. Particular preference is here given to, inter alia, methane, adamantane, acetylene, ethylene or butadiene.

The aromatic compound or the aromatic part of the both aromatic and aliphatic compound can have one or more rings, for example two, three, four or five rings, with the rings being able to be separate from one another and/or at least two rings being able to be present in fused form. The aromatic compound or the aromatic part of the both aliphatic and aromatic compound particularly preferably has one, two or three rings, with one or two rings being particularly preferred. Furthermore, each ring of the specified compound can independently comprise at least one heteroatom such as N, O, S, B, P, Si, Al, preferably N, O and/or S. The aromatic compound or the aromatic part of the both aromatic and aliphatic compound more preferably comprises one or two C₆ rings which are present either separately or in fused form. Particular mention may be made of benzene, naphthalene and/or biphenyl and/or bipyridyl and/or pyridyl as aromatic compounds.

The at least bidentate organic compound is more preferably an aliphatic or aromatic, acyclic or cyclic hydrocarbon which has from 1 to 18, preferably from 1 to 10 and in particular 6, carbon atoms and additionally has exclusively 2, 3 or 4 carboxyl groups as functional groups.

For example, the at least bidentate organic compound is derived from a dicarboxylic acid that already has at least one isocyanate reactive functional group or that can serve as starting material for the preparation of a dicarboxylic acid by derivatization. Examples of dicarboxylic acids are oxalic acid, succinic acid, tartaric acid, 1,4-butanedicarboxylic acid, 1,4-butenedicarboxylic acid, 4-oxopyran-2,6-dicarboxylic acid, 1,6-hexanedicarboxylic acid, decanedicarboxylic acid, 1,8-heptadecanedicarboxylic acid, 1,9-heptadecanedicarboxylic acid, heptadecanedicarboxylic acid, acetylenedicarboxylic acid, 1,2-benzenedicarboxylic acid, 1,3-benzenedicarboxylic acid, 2,3-pyridinedicarboxylic acid, pyridine-2,3-dicarboxylic acid, 1,3-butadiene-1,4-dicarboxylic acid, 1,4-benzenedicarboxylic acid, p-benzenedicarboxylic acid, imidazole-2,4-dicarboxylic acid, 2-methylquinoline-3,4-dicarboxylic acid, quinoline-2,4-dicarboxylic acid, quinoxaline-2,3-dicarboxylic acid, 6-chloroquinoxaline-2,3-dicarboxylic acid, 4,4'-diaminophenylmethane-3,3'-dicarboxylic acid, quinoline-3,4-dicarboxylic acid, 7-chloro-4-hydroxyquinoline-2,8-dicarboxylic acid, diimide-carboxylic acid, pyridine-2,6-dicarboxylic acid, 2-methylimidazole-4,5-dicarboxylic acid, thiophene-3,4-dicarboxylic acid, 2-isopropylimidazole-4,5-dicarboxylic acid, tetrahydropyrane-4,4-dicarboxylic acid, perylene-3,9-dicarboxylic acid, perylenedicarboxylic acid, Pluriol E 200-dicarboxylic acid, 3,6-dioxaoctanedicarboxylic acid, 3,5-cyclohexadiene-1,2-dicarboxylic acid, octadicarboxylic acid, pentane-3,3-carboxylic acid, 4,4'-diamino-1,1'-diphenyl-3,3'-dicarboxylic acid, 4,4'-diaminodiphenyl-3,3'-dicarboxylic acid, benzidine-3,3'-dicarboxylic acid, 1,4-bis(phe-nylamino)benzene-2,5-dicarboxylic acid, 1,1'-dinaphthyldicarboxylic acid, 7-chloro-8-methylquinoline-2,3-dicarboxylic acid, 1-anilinoanthraquinone-2,4'-dicarboxylic acid, polytetrahydrofuran 250-dicarboxylic acid, 1,4-bis(carboxymethyl)piperazine-2,3-dicarboxylic acid, 7-chloroquinoline-3,8-dicarboxylic acid, 1-(4-carboxy)phenyl-3-(4-chloro)phenylpyrazoline-4,5-dicarboxylic acid, 1,4,5,6,7,7-hexachloro-5-norbornene-2,3-dicarboxylic acid, phenylindanedicarboxylic acid, 1,3-dibenzyl-2-oxoimidazolidine-4,5-dicarboxylic acid, 1,4-cyclohexanedicarboxylic acid, naphthalene-1,8-dicarboxylic acid, 2,-benzoylbenzene-1,3-dicarboxylic acid, 1,3-dibenzyl-2-oxoimid-azolidine-4,5-cis-dicarboxylic acid, 2,2'-biquinoline-4,4'-dicarboxylic acid, pyridine-3,4-dicarboxylic acid, 3,6,9-trioxaundecanedicarboxylic acid, hydroxybenophenonedicarboxylic acid, Pluriol E 300-dicarboxylic acid, Pluriol E 400-dicarboxylic acid, Pluriol E 600-dicarboxylic acid, pyrazole-3,4-dicarboxylic acid, 2,3-pyrazinedicarboxylic acid, 5,6-dimethyl-2,3-pyrazinedicarboxylic acid, 4,4'-diamino(diphenyl ether)diimidedicarboxylic acid, 4,4'-diaminodiphenylme-thanediimidedicarboxylic acid, 4,4'-diamino(diphenyl sulfone)diimidedicarboxylic acid, 1,4-naphthalenedicarboxylic acid, 2,6-naphthalenedicarboxylic acid, 1,3-adamantanedicarboxylic acid, 1,8-naphthalenedicarboxylic acid, 2,3-naphthalenedicarboxylic acid, 8-methoxy-2,3-naphthalenedicarboxylic acid, 8-nitro-2,3-naphthalenecarboxylic acid, 8-sulfo-2,3-naphthalenedicarboxylic acid, anthracene-2,3-dicarboxylic acid, 2',3'-diphenyl-p-terphenyl-4,4"-dicarboxylic acid, (diphenyl ether)-4,4'-dicarboxylic acid, imidazole-4,5-dicarboxylic acid, 4(1H)-oxothiochromene-2,8-dicarboxylic acid, 5-tert-butyl-1,3-benzenedicarboxylic acid, 7,8-quinolinedicarboxylic acid, 4,5-imidazoledicarboxylic acid, 4-cyclohexene-1,2-dicarboxylic acid, hexatriacontanedicarbox-ylic acid, tetradecanedicarboxylic acid, 1,7-heptadicarboxylic acid, 5-hydroxy-1,3-benzenedicarboxylic acid, 2,5-dihydroxy-1,4-dicarboxylic acid, pyrazine-2,3-dicarboxylic acid, furan-2,5-dicarboxylic acid, 1-nonene-6,9-dicarboxylic acid, eicosenedicarboxylic acid, 4,4'-dihydroxydiphenylmethane-3,3'-dicarboxylic acid, 1-amino-4-methyl-9,10-dioxo-9,10-dihydroanthracene-2,3-dicarboxylic acid, 2,5-pyridinedicarboxylic acid, cyclohexene-2,3-dicarboxylic acid, 2,9-dichloro-fluorubin-4,11-dicarboxylic acid, 7-chloro-3-methylquinoline-6,8-dicarboxylic acid, 2,4-dichloro-benzophenone-2',5'-dicarboxylic acid, 1,3-benzenedicarboxylic acid, 2,6-pyridinedicarboxylic acid, 1-methylpyrrole-3,4-dicarboxylic acid, 1-benzyl-1H-pyrrole-3,4-dicarboxylic acid, anthraquinone-1,5-dicarboxylic acid, 3,5-pyrazoledicarboxylic acid, 2-nitrobenzene-1,4-dicarboxylic acid, heptane-1,7-dicarboxylic acid, cyclobutane-1,1-dicarboxylic acid, 1,14-tetradecanedicarboxylic acid, 5,-6-dehydronorbornane-2,3-dicarboxylic acid, 5-ethyl-2,3-pyridinedicarboxylic acid or camphordicarboxylic acid.

For example, the at least bidentate organic compound can be derived from a tricarboxylic acid that already has at least one isocyanate reactive functional group or that can serve as starting material for the preparation of a tricarboxylic acid by derivatization. Examples of tricarboxylic acids are

2-hydroxy-1,2,3-propanetricarboxylic acid, 7-chloro-2,3,8-quinolinetricarboxylic acid, 1,2,3-, 1,2,4-benzenetricarboxylic acid, 1,2,4-butanetricarboxylic acid, 2-phosphono-1,2,4-butanetricarboxylic acid, 1,3,5-benzenetricarboxylic acid, 1-hydroxy-1,2,3-propanetricarboxylic acid, 4,5-di-hydro-4,5-dioxo-1H-pyrrolo[2,3-F]quinoline-2,7,9-tricarboxylic acid, 5-acetyl-3-amino-6-methylbenzene-1,2,4-tricarboxylic acid, 3-amino-5-benzoyl-6-methylbenzene-1,2,4-tricarboxylic acid, 1,2,3-propanetricarboxylic acid or aurintricarboxylic acid.

Examples of an at least bidentate organic compound derived from a tetracarboxylic acid that can serve as starting material for the preparation of a tetracarboxylic acid by derivatization, are 1,1-dioxidoperylo[1,12-BCD]thiophene-3,4,9,10-tetracarboxylic acid, perylenetetracarboxylic acids such as peryiene-3,4,9,10-tetracarboxylic acid or (perylene 1,12-sulfone)-3,4,9,10-tetracarboxylic acid, butanetetracarboxylic acids such as 1,2,3,4-butanetetracarboxylic acid or meso-1,2,3,4-butanetetracarboxylic acid, decane-2,4,6,8-tetracarboxylic acid, 1,4,7,10,13,16-hexao-xacyclooctadecane-2,3,11,12-tetracarboxylic acid, 1,2,4,5-benzenetetracarboxylic acid, 1,2,11,12-dodecanetetracarboxylic acid, 1,2,5,6-hexanetetracarboxylic acid, 1,2,7,8-octanetetracarboxylic acid, 1,4,5,8-naphthalenetetracarboxylic acid, 1,2,9,10-decanetetracarbox-ylic acid, benzophenonetetracarboxylic acid, 3,3',4,4'-benzophenonetetracarboxylic acid, tetra-hydrofurantetracarboxylic acid or cyclopentanetetracarboxylic acids such as cyclopentane-1,2,3,4-tetracarboxylic acid.

Very particular preference is given to at least monosubstituted aromatic dicarboxylic, tricarboxylic or tetracarboxylic acids having one, two, three, four or more rings, with each of the rings being able to comprise at least one heteroatom and two or more rings being able to comprise identical or different heteroatoms. For example, preference is given to one-ring dicarboxylic acids, one-ring tricarboxylic acids, one-ring tetracarboxylic acids, two-ring dicarboxylic acids, two-ring tricarboxylic acids, two-ring tetracarboxylic acids, three-ring dicarboxylic acids, three-ring tricarboxylic acids, three-ring tetracarboxylic acids, four-ring dicarboxylic acids, four-ring tricarboxylic acids and/or four-ring tetracarboxylic acids. Suitable heteroatoms are, for example, N, O, S, B, P, and preferred heteroatoms are N, S and/or O. Suitable substituents are those isocyanate reactive functional groups mentioned above.

Especially preferred is metal-organic framework material, wherein the at least bidentate organic compound is an at least monoaminosubstituted aromatic dicarboxylic acid selected from the group consisting of terephthalic acid, 2,6-naphthalenedicarboxylic acid, 1,4-naphthalenedicarboxylic acid, 1,5-naphthalenedicarboxylic acid and derivatives thereof in which at least one CH group in the ring is replaced by nitrogen, wherein the framework in powder form preferably has a specific surface area determined by the Langmuir method (N₂, 77 K) of at least 2500 m²/g. Such MOFs are described in WO 2008/142059 A1.

In a particularly preferred embodiment the at least one at least bidentate organic compound is derived from an amino polycarboxylic acid, preferably derived from an amino dicarboxylic acid, even more preferably derived from 2-aminoterephthalic acid.

Apart from these at least bidentate organic compounds, the metal-organic framework can also comprise one or more monodentate ligands.

For the purposes of the present invention, the term "derived" means that the at least one at least bidentate organic compound is present in partially or completely deprotonated form. For the purposes of the present invention, the term "derived" also means that the carboxylic acid function can be present as a sulfur analogue. Sulfur analogues are -C(=O)SH and also its tautomer and -C(S)SH.

Suitable solvents for preparing the metal-organic framework are, inter alia, ethanol, dimethylformamide, toluene, methanol, chlorobenzene, diethylformamide, dimethyl sulfoxide, water, hydrogen peroxide, methylamine, sodium hydroxide solution, N-methylpyrrolidone ether, acetonitrile, benzyl chloride, triethylamine, ethylene glycol and mixtures thereof. Further metal ions, at least bidentate organic compounds and solvents for the preparation of MOFs are described, inter alia, in US-A 5,648,508 or DE-A 101 11 230.

The pore size of the metal-organic framework can be controlled by selection of the appropriate ligand and/or the at least bidentate organic compound. In general, the larger the organic compound, the larger the pore size. The pore size is preferably from 0.2 nm to 30 nm, particularly preferably in the range from 0.3 nm to 9 nm, based on the crystalline material.

However, larger pores whose size distribution can vary also occur in a shaped body comprising a metal-organic framework. Preference is, however, given to more than 50% of the total pore volume, in particular more than 75%, being made up by pores having a pore diameter of up to 1000 mm. However, preference is given to a major part of the pore volume being made up by pores having two diameter ranges. It is therefore preferred for more than 25% of the total pore volume, in particular more than 50% of the total pore volume, to be made up by pores which have a diameter in the range from 100 nm to 800 nm and more than 15% of the total pore volume, in particular more than 25% of the total pore volume, to be made up by pores which have a diameter up to 10 nm. The pore distribution can be determined by means of mercury porosimetry.

Examples of metal-organic frameworks that already has at least one isocyanate reactive functional group or that can serve as starting material for the preparation of a metal-organic framework material by derivatization are given below. The designation of the framework, the metal and the at least bidentate ligand and also the solvent and the cell parameters (angles α, β and γ and the dimensions A, B and C in Å) are indicated. The latter were determined by X-ray diffraction.

| **MOF-n** | **Constituents molar ratio M+L** | **Solvent s** | **α** | **β** | **γ** | **a** | **b** | **c** | **Space group** |
|---|---|---|---|---|---|---|---|---|---|
| MOF-0 | Zn(NO₃)₂•6H₂O | ethanol | 90 | 90 | 120 | 16.711 | 16.711 | 14.189 | P6(3)/ Mcm |
| | H₃(BTC) | | | | | | | | |
| MOF-2 | Zn(NO₃)₂•6H₂O (0.246 mmol) | DMF toluene | 90 | 102.8 | 90 | 6.718 | 15.49 | 12.43 | P2(1)/n |
| | H₂(BDC) 0.241 mmol) | | | | | | | | |
| MOF-3 | Zn(NO₃)₂•6H₂O (1.89 mmol) | DMF MeOH | 99.72 | 111.11 | 108.4 | 9.726 | 9.911 | 10.45 | P-1 |
| | H₂(BDC) (1.93mmol) | | | | | | | | |
| MOF-4 | Zn(NO₃)₂•6H₂O (1.00 mmol) | ethanol | 90 | 90 | 90 | 14.728 | 14.728 | 14.728 | P2(1)3 |
| | H₃(BTC) (0.5 mmol) | | | | | | | | |
| MOF-5 | Zn(NO₃)₂•6H₂O (2.22 mmol) | DMF chlorobenzene | 90 | 90 | 90 | 25.669 | 25.669 | 25.669 | Fm-3m |
| | H₂(BDC) (2.17 mmol) | | | | | | | | |
| MOF-38 | Zn(NO₃)₂•6H₂O (0.27 mmol) | DMF chlorobenzene | 90 | 90 | 90 | 20.657 | 20.657 | 17.84 | I4cm |
| | H₃(BTC) (0.15 mmol) | | | | | | | | |
| MOF-31 | Zn(NO₃)₂•6H₂O | ethanol | 90 | 90 | 90 | 10.821 | 10.821 | 10.821 | Pn(-3)m |
| Zn(ADC)₂ | 0.4 mmol | | | | | | | | |
| | H₂(ADC) | | | | | | | | |
| | 0.8 mmol | | | | | | | | |
| MOF-12 | Zn(NO₃)₂•6H₂O | ethanol | 90 | 90 | 90 | 15.745 | 16.907 | 18.167 | Pbca |
| Zn₂(ATC) | 0.3 mmol | | | | | | | | |
| | H₄(ATC) | | | | | | | | |
| | 0.15 mmol | | | | | | | | |
| MOF-20 | Zn(NO₃)₂•6H₂O | DMF chlorobenzene | 90 | 92.13 | 90 | 8.13 | 16.444 | 12.807 | P2(1)/c |
| ZnNDC | 0.37 mmol | | | | | | | | |
| | H₂NDC | | | | | | | | |
| | 0.36 mmol | | | | | | | | |
| MOF-37 | Zn(NO₃)₂•6H₂PO | DEF chlorobenzene | 72.38 | 83.16 | 84.33 | 9.952 | 11.576 | 15.556 | P-1 |
| | 0.2 mmol | | | | | | | | |
| | H₂NDC | | | | | | | | |
| | 0.2 mmol | | | | | | | | |
| MOF-8 | Tb(NO₃)₃•5H₂O | DMSO | 90 | 115.7 | 90 | 19.83 | 9.822 | 19.183 | C2/c |
| Tb₂ (ADC) | 0.10 mmol | MeOH | | | | | | | |
| | H₂ADC | | | | | | | | |
| | 0.20 mmol | | | | | | | | |
| MOF-9 | Tb(NO₃)₃•5H₂O | DMSO | 90 | 102.09 | 90 | 27.056 | 16.795 | 28.139 | C2/c |
| Tb₂ (ADC) | 0.08 mmol | | | | | | | | |
| | H₂ADB | | | | | | | | |
| | 0.12 mmol | | | | | | | | |
| MOF-6 | Tb(NO₃)₃•5H₂O | DMF | 90 | 91.28 | 90 | 17.599 | 19.996 | 10.545 | P21/c |
| | 0.30 mmol | MeOH | | | | | | | |
| | H₂ (BDC) | | | | | | | | |
| | 0.30 mmol | | | | | | | | |
| MOF-7 | Tb(NO₃)₃•5H₂O | H₂O | 102.3 | 91.12 | 101.5 | 6.142 | 10.069 | 10.096 | P-1 |
| | 0.15 mmol | | | | | | | | |
| | H₂(BDC) | | | | | | | | |
| | 0.15 mmol | | | | | | | | |
| MOF-69A | Zn(NO₃)₂•6H₂O | DEF | 90 | 111.6 | 90 | 23.12 | 20.92 | 12 | C2/c |
| | 0.083 mmol | H₂O₂ | | | | | | | |
| | 4,4'BPDC | MeNH₂ | | | | | | | |
| | 0.041 mmol | | | | | | | | |
| MOF-69B | Zn(NO₃)₂•6H₂O | DEF | 90 | 95.3 | 90 | 20.17 | 18.55 | 12.16 | C2/c |
| | 0.083 mmol | H₂O₂ | | | | | | | |
| | 2,6-NCD | MeNH₂ | | | | | | | |
| | 0.041 mmol | | | | | | | | |
| MOF-11 | Cu(NO₃)₂•2.5H₂O | H₂O | 90 | 93.86 | 90 | 12.987 | 11.22 | 11.336 | C2/c |
| Cu₂(ATC) | 0.47 mmol | | | | | | | | |
| | H₂ATC | | | | | | | | |
| | 0.22 mmol | | | | | | | | |
| MOF-11 | | | 90 | 90 | 90 | 8.4671 | 8.4671 | 14.44 | P42/ mmc |
| Cu₂(ATC) dehydr. | | | | | | | | | |
| MOF-14 | Cu(NO₃)₂•2.5H₂O | H₂O | 90 | 90 | 90 | 26.946 | 26.946 | 26.946 | Im-3 |
| Cu₃ (BTB) | 0.28 mmol | DMF | | | | | | | |
| | H₃BTB | EtOH | | | | | | | |
| | 0.052 mmol | | | | | | | | |
| MOF-32 | Cd(NO₃)₂•4H₂O | H₂O | 90 | 90 | 90 | 13.468 | 13.468 | 13.468 | P(-4)3m |
| Cd(ATC) | 0.24 mmol | NaOH | | | | | | | |
| | H₄ATC | | | | | | | | |
| | 0.10 mmol | | | | | | | | |
| MOF-33 | ZnCl₂ | H₂O | 90 | 90 | 90 | 19.561 | 15.255 | 23.404 | Imma |
| Zn₂ (ATB) | 0.15 mmol | DMF | | | | | | | |
| | H₄ATB | EtOH | | | | | | | |
| | 0.02 mmol | | | | | | | | |
| MOF-34 | Ni(NO₃)₂•6H₂O | H₂O | 90 | 90 | 90 | 10.066 | 11.163 | 19.201 | P2₁2₁2₁ |
| Ni(ATC) | 0.24 mmol | NaOH | | | | | | | |
| | H₄ATC | | | | | | | | |
| | 0.10 mmol | | | | | | | | |
| MOF-36 | Zn(NO₃)₂•4H₂O | H₂O | 90 | 90 | 90 | 15.745 | 16.907 | 18.167 | Pbca |
| Zn₂ (MTB) | 0.20 mmol | DMF | | | | | | | |
| | H₄MTB | | | | | | | | |
| | 0.04 mmol | | | | | | | | |
| MOF-39 | Zn(NO₃)₂4H₂O | H₂O | 90 | 90 | 90 | 17.158 | 21.591 | 25.308 | Pnma |
| Zn₃O(HBTB) | 0.27 mmol | DMF | | | | | | | |
| | H₃BTB | EtOH | | | | | | | |
| | 0.07 mmol | | | | | | | | |
| NO305 | FeCl₂•4H₂O | DMF | 90 | 90 | 120 | 8.2692 | 8.2692 | 63.566 | R-3c |
| | 5.03 mmol | | | | | | | | |
| | formic acid | | | | | | | | |
| | 86.90 mmol | | | | | | | | |
| NO306A | FeCl₂•4H₂O | DEF | 90 | 90 | 90 | 9.9364 | 18.374 | 18.374 | Pbcn |
| | 5.03 mmol | | | | | | | | |
| | formic acid | | | | | | | | |
| | 86.90 mmol | | | | | | | | |

| | | | | | | | | | |
|---|---|---|---|---|---|---|---|---|---|
| NO29 MOF-0 similar | Mn(Ac)₂•4H₂O | DMF | 120 | 90 | 90 | 14.16 | 33.521 | 33.521 | P-1 |
| | 0.46 mmol | | | | | | | | |
| | H₃BTC | | | | | | | | |
| | 0.69 mmol | | | | | | | | |
| BPR48 | Zn(NO₃)₂ 6H₂O | DMSO toluene | 90 | 90 | 90 | 14.5 | 17.04 | 18.02 | Pbca |
| A2 | 0.012 mmol | | | | | | | | |
| | H₂BDC | | | | | | | | |
| | 0.012 mmol | | | | | | | | |
| BPR69 | Cd(NO₃)₂ 4H₂O | DMSO | 90 | 98.76 | 90 | 14.16 | 15.72 | 17.66 | Cc |
| B1 | 0.0212 mmol | | | | | | | | |
| | H₂BDC | | | | | | | | |
| | 0.0428 mmol | | | | | | | | |
| BPR92 | Co(NO₃)₂·6H₂O | NMP | 106.3 | 107.63 | 107.2 | 7.5308 | 10.942 | 11.025 | P1 |
| A2 | 0.018 mmol | | | | | | | | |
| | H₂BDC | | | | | | | | |
| | 0.018 mmol | | | | | | | | |
| BPR95 | Cd(NO₃)₂ 4H₂O | NMP | 90 | 112.8 | 90 | 14.460 | 11.085 | 15.829 | P2(1)/n |
| C5 | 0.012 mmol | | | | | | | | |
| | H₂BDC | | | | | | | | |
| | 0.36 mmol | | | | | | | | |
| Cu C₆H₄O₆ | Cu(NO₃)₂•2.5H₂O | DMF chlorobenzene | 90 | 105.29 | 90 | 15.259 | 14.816 | 14.13 | P2(1)/c |
| | 0.370 mmol | | | | | | | | |
| | H₂BDC(OH)₂ | | | | | | | | |
| | 0.37 mmol | | | | | | | | |
| M(BTC) MOF-0 similar | Co(SO₄) H₂O | DMF | as for MOF-0 | | | | | | |
| | 0.055 mmol | | | | | | | | |
| | H₃BTC | | | | | | | | |
| | 0.037 mmol | | | | | | | | |
| Tb(C₆H₄O₆) | Tb(NO₃)₃•5H₂O | DMF chlorobenzene | 104.6 | 107.9 | 97.147 | 10.491 | 10.981 | 12.541 | P-1 |
| | 0.370 mmol | | | | | | | | |
| | H₂(C₆H₄O₆) | | | | | | | | |
| | 0.56 mmol | | | | | | | | |
| Zn (C₂O₄) | ZnCl₂ | DMF chlorobenzene | 90 | 120 | 90 | 9.4168 | 9.4168 | 8.464 | P(-3)1m |
| | 0.370 mmol | | | | | | | | |
| | oxalic acid | | | | | | | | |
| | 0.37 mmol | | | | | | | | |
| Co(CHO) | Co(NO₃)₂•5H₂O | DMF | 90 | 91.32 | 90 | 11.328 | 10.049 | 14.854 | P2(1)/n |
| | 0.043 mmol | | | | | | | | |
| | formic acid | | | | | | | | |
| | 1.60 mmol | | | | | | | | |
| Cd(CHO) | Cd(NO₃)₂•4H₂O | DMF | 90 | 120 | 90 | 8.5168 | 8.5168 | 22.674 | R-3c |
| | 0.185 mmol | | | | | | | | |
| | formic acid | | | | | | | | |
| | 0.185 mmol | | | | | | | | |
| Cu(C₃H₂O₄) | Cu(NO₃)₂•2.5H₂O | DMF | 90 | 90 | 90 | 8.366 | 8.366 | 11.919 | P43 |
| | 0.043 mmol | | | | | | | | |
| | malonic acid | | | | | | | | |
| | 0.192 mmol | | | | | | | | |
| Zn₆ (NDC)₅ | Zn(NO₃)₂•6H₂O | DMF chlorobenzene H₂O₂ | 90 | 95.902 | 90 | 19.504 | 16.482 | 14.64 | C2/m |
| MOF-48 | 0.097 mmol | | | | | | | | |
| | 14 NDC | | | | | | | | |
| | 0.069 mmol | | | | | | | | |

| | | | | | | | | | |
|---|---|---|---|---|---|---|---|---|---|
| MOF-47 | Zn(NO₃)₂ 6H₂O | DMF chloro-benzene H₂O₂ | 90 | 92.55 | 90 | 11.303 | 16.029 | 17.535 | P2(1)/c |
| | 0.185 mmol | | | | | | | | |
| | H₂(BOC[CH₃]₄) | | | | | | | | |
| | 0.185 mmol | | | | | | | | |
| MO25 | Cu(NO₃)₂•2.5H₂O | DMF | 90 | 112.0 | 90 | 23.880 | 16.834 | 18.389 | P2(1)/c |
| | 0.084 mmol | | | | | | | | |
| | BPhDC | | | | | | | | |
| | 0.085 mmol | | | | | | | | |
| Cu-Thio | Cu(NO₃)₂•2.5H₂O | DEF | 90 | 113.6 | 90 | 15.474 7 | 14.514 | 14.032 | P2(1)/c |
| | 0.084 mmol | | | | | | | | |
| | thiophenedicarboxylic acid | | | | | | | | |
| | 0.085 mmol | | | | | | | | |
| CIBDC1 | Cu(NO₃)₂•2.5H₂O0. | DMF | 90 | 105.6 | 90 | 14.911 | 15.622 | 18.413 | C2/c |
| | 084 mmol | | | | | | | | |
| | H₂(BDCCl₂) | | | | | | | | |
| | 0.085 mmol | | | | | | | | |
| MOF-101 | Cu(NO₃)₂•2.5H₂O | DMF | 90 | 90 | 90 | 21.607 | 20.607 | 20.073 | Fm3m |
| | 0.084 mmol | | | | | | | | |
| | BrBDC | | | | | | | | |
| | 0.085 mmol | | | | | | | | |
| Zn₃(BTC)₂ | ZnCl₂ | DMF EtOH base added | 90 | 90 | 90 | 26.572 | 26.572 | 26.572 | Fm-3m |
| | 0.033 mmol | | | | | | | | |
| | H₃BTC | | | | | | | | |
| | 0.033 mmol | | | | | | | | |
| MOF-j | Co(CH₃CO₂)₂•4H₂O | H₂O | 90 | 112.0 | 90 | 17.482 | 12.963 | 6.559 | C2 |
| | (1.65 mmol) | | | | | | | | |
| | H₃(BZC) | | | | | | | | |
| | (0.95 mmol) | | | | | | | | |
| MOF-n | Zn(NO₃)₂•6H₂O | ethanol | 90 | 90 | 120 | 16.711 | 16.711 | 14.189 | P6(3)/mc m |
| | H₃ (BTC) | | | | | | | | |
| PbBDC | Pb(NO₃)₂ | DMF ethanol | 90 | 102.7 | 90 | 8.3639 | 17.991 | 9.9617 | P2(1)/n |
| | (0.181 mmol) | | | | | | | | |
| | H₂(BDC) | | | | | | | | |
| | (0.181 mmol) | | | | | | | | |
| Znhex | Zn(NO₃)₂•6H₂O | DMF p-xylene ethanol | 90 | 90 | 120 | 37.116 5 | 37.117 | 30.019 | P3(1)c |
| | (0.171 mmol) | | | | | | | | |
| | H₃BTB (0.114 mmol) | | | | | | | | |
| AS16 | FeBr₂ | DMF anhydr. | 90 | 90.13 | 90 | 7.2595 | 8.7894 | 19.484 | P2(1)c |
| | 0.927 mmol | | | | | | | | |
| | H₂(BDC) | | | | | | | | |
| | 0.927 mmol | | | | | | | | |
| AS27-2 | FeBr₂ | DMF anhydr. | 90 | 90 | 90 | 26.735 | 26.735 | 26.735 | Fm3m |
| | 0.927 mmol | | | | | | | | |
| | H₃(BDC) | | | | | | | | |
| | 0.464 mmol | | | | | | | | |
| AS32 | FeCl₃ | DMF anhydr. ethanol | 90 | 90 | 120 | 12.535 | 12.535 | 18.479 | P6(2)c |
| | 1.23 mmol | | | | | | | | |
| | H₂(BDC) | | | | | | | | |
| | 1.23 mmol | | | | | | | | |

| | | | | | | | | | |
|---|---|---|---|---|---|---|---|---|---|
| AS54-3 | FeBr₂ | DMF anhydr. n-propanol | 90 | 109.98 | 90 | 12.019 | 15.286 | 14.399 | C2 |
| | 0.927 | | | | | | | | |
| | BPDC | | | | | | | | |
| | 0.927 mmol | | | | | | | | |
| AS61-4 | FeBr₂ | pyridine anhydr. | 90 | 90 | 120 | 13.017 | 13.017 | 14.896 | P6(2)c |
| | 0.927 mmol | | | | | | | | |
| | m-BDC | | | | | | | | |
| | 0.927 mmol | | | | | | | | |
| AS68-7 | FeBr₂ | DMF anhydr. pyridine | 90 | 90 | 90 | 18.340 7 | 10.036 | 18.039 | Pca2₁ |
| | 0.927 mmol | | | | | | | | |
| | m-BDC | | | | | | | | |
| | 1.204 mmol | | | | | | | | |
| Zn(ADC) | Zn(NO₃)₂•6H₂O | DMF chlorobenzene | 90 | 99.85 | 90 | 16.764 | 9.349 | 9.635 | C2/c |
| | 0.37 mmol | | | | | | | | |
| | H₂(ADC) | | | | | | | | |
| | 0.36 mmol | | | | | | | | |
| MOF-12 | Zn(NO₃)₂•6H₂O | ethanol | 90 | 90 | 90 | 15.745 | 16.907 | 18.167 | Pbca |
| Zn₂ (ATC) | 0.30 mmol | | | | | | | | |
| | H₄(ATC) | | | | | | | | |
| | 0.15 mmol | | | | | | | | |
| MOF-20 | Zn(NO₃)₂•6H₂O | DMF chlorobenzene | 90 | 92.13 | 90 | 8.13 | 16.444 | 12.807 | P2(1)/c |
| ZnNDC | 0.37 mmol | | | | | | | | |
| | H₂NDC | | | | | | | | |
| | 0.36 mmol | | | | | | | | |
| MOF-37 | Zn(NO₃)₂•6H₂O | DEF chlorobenzene | 72.38 | 83.16 | 84.33 | 9.952 | 11.576 | 15.556 | P-1 |
| | 0.20 mmol | | | | | | | | |
| | H₂NDC | | | | | | | | |
| | 0.20 mmol | | | | | | | | |
| Zn(NDC) (DMSO) | Zn(NO₃)₂•6H₂O | DMSO | 68.08 | 75.33 | 88.31 | 8.631 | 10.207 | 13.114 | P-1 |
| | H₂NDC | | | | | | | | |
| Zn(NDC) | Zn(NO₃)₂•6H₂O | | 90 | 99.2 | 90 | 19.289 | 17.628 | 15.052 | C2/c |
| | H₂NDC | | | | | | | | |
| Zn(HPDC) | Zn(NO₃)₂•4H₂O | DMF | 107.9 | 105.06 | 94.4 | 8.326 | 12.085 | 13.767 | P-1 |
| | 0.23 mmol | H₂O | | | | | | | |
| | H₂(HPDC) | | | | | | | | |
| | 0.05 mmol | | | | | | | | |
| Co(HPDC) | Co(NO₃)₂•6H₂O | DMF | 90 | 97.69 | 90 | 29.677 | 9.63 | 7.981 | C2/c |
| | 0.21 mmol | H₂O/ ethanol | | | | | | | |
| | H₂ (HPDC) | | | | | | | | |
| | 0.06 mmol | | | | | | | | |
| Zn₃(PDC)2.5 | Zn(NO₃)₂•4H₂O | DMF/ CIBz | 79.34 | 80.8 | 85.83 | 8.564 | 14.046 | 26.428 | P-1 |
| | 0.17 mmol | | | | | | | | |
| | H₂(HPDC) | H₂0/ TEA | | | | | | | |
| | 0.05 mmol | | | | | | | | |
| Cd₂ (TPDC)2 | Cd(NO₃)₂•4H₂O | methanol/ CHP H₂O | 70.59 | 72.75 | 87.14 | 10.102 | 14.412 | 14.964 | P-1 |
| | 0.06 mmol | | | | | | | | |
| | H₂(HPDC) | | | | | | | | |
| | 0.06 mmol | | | | | | | | |
| Tb(PDC)1.5 | Tb(NO₃)₃•5H₂O | DMF H₂O/ ethanol | 109.8 | 103.61 | 100.14 | 9.829 | 12.11 | 14.628 | P-1 |
| | 0.21 mmol | | | | | | | | |
| | H₂(PDC) | | | | | | | | |
| | 0.034 mmol | | | | | | | | |

| | | | | | | | | | |
|---|---|---|---|---|---|---|---|---|---|
| ZnDBP | Zn(NO₃)₂•6H₂O 0.05 mmol | MeOH | 90 | 93.67 | 90 | 9.254 | 10.762 | 27.93 | P2/n |
| | dibenzyl phosphate 0.10 mmol | | | | | | | | |
| Zn₃(BPDC) | ZnBr₂ 0.021 mmol | DMF | 90 | 102.76 | 90 | 11.49 | 14.79 | 19.18 | P21/n |
| | 4,4'BPDC 0.005 mmol | | | | | | | | |
| CdBDC | Cd(NO₃)₂•4H₂O 0.100 mmol | DMF Na₂SiO₃ (aq) | 90 | 95.85 | 90 | 11.2 | 11.11 | 16.71 | P21/n |
| | H₂(BDC) 0.401 mmol | | | | | | | | |
| Cd-mBDC | Cd(NO₃)₂•4H₂O 0.009 mmol | DMF MeNH₂ | 90 | 101.1 | 90 | 13.69 | 18.25 | 14.91 | C2/c |
| | H₂(mBDC) 0.018 mmol | | | | | | | | |
| Zn₄OBNDC | Zn(NO₃)₂•6H₂O 0.041 mmol | DEF MeNH₂ H₂O₂ | 90 | 90 | 90 | 22.35 | 26.05 | 59.56 | Fmmm |
| | BNDC | | | | | | | | |
| Eu(TCA) | Eu(NO₃)₃•6H₂O 0.14 mmol | DMF chlorobenzene | 90 | 90 | 90 | 23.325 | 23.325 | 23.325 | Pm-3n |
| | TCA 0.026 mmol | | | | | | | | |
| Tb(TCA) | Tb(NO₃)₃•6H₂O 0.069 mmol | DMF chlorobenzene | 90 | 90 | 90 | 23.272 | 23.272 | 23.372 | Pm-3n |
| | TCA 0.026 mmol | | | | | | | | |
| Formates | Ce(NO₃)₃•6H₂O 0.138 mmol | H₂O ethanol | 90 | 90 | 120 | 10.668 | 10.667 | 4.107 | R-3m |
| | formic acid 0.43 mmol | | | | | | | | |
| | FeCl₂•4H₂O 5.03 mmol | DMF | 90 | 90 | 120 | 8.2692 | 8.2692 | 63.566 | R-3c |
| | formic acid | | | | | | | | |
| | 86.90 mmol | | | | | | | | |
| | FeCl₂•4H₂O 5.03 mmol | DEF | 90 | 90 | 90 | 9.9364 | 18.374 | 18.374 | Pbcn |
| | formic acid 86.90 mmol | | | | | | | | |
| | FeCl₂•4H₂O 5.03 mmol | DEF | 90 | 90 | 90 | 8.335 | 8.335 | 13.34 | P-31c |
| | formic acid 86.90 mmol | | | | | | | | |
| NO330 | FeCl₂•4H₂O 0.50 mmol | form-amide | 90 | 90 | 90 | 8.7749 | 11.655 | 8.3297 | Pnna |
| | formic acid 8.69 mmol | | | | | | | | |
| NO332 | FeCl₂•4H₂O 0.50 mmol | DIP | 90 | 90 | 90 | 10.031 3 | 18.808 | 18.355 | Pbcn |
| | formic acid 8.69 mmol | | | | | | | | |
| NO333 | FeCl₂•4H₂O 0.50 mmol | DBF | 90 | 90 | 90 | 45.275 4 | 23.861 | 12.441 | Cmcm |
| | formic acid 8.69 mmol | | | | | | | | |
| NO335 | FeCl₂•4H₂O 0.50 mmol | CHF | 90 | 91.372 | 90 | 11.596 4 | 10.187 | 14.945 | P21/n |
| | formic acid 8.69 mmol | | | | | | | | |
| NO336 | FeCl₂•4H₂O 0.50 mmol | MFA | 90 | 90 | 90 | 11.794 5 | 48.843 | 8.4136 | Pbcm |
| | formic acid 8.69 mmol | | | | | | | | |
| NO13 | Mn(Ac)₂•4H₂O 0.46 mmol | ethanol | 90 | 90 | 90 | 18.66 | 11.762 | 9.418 | Pbcn |
| | benzoic acid 0.92 mmol | | | | | | | | |
| | bipyridine 0.46 mmol | | | | | | | | |
| NO29 MOF-0 similar | Mn(Ac)₂•4H₂O 0.46 mmol | DMF | 120 | 90 | 90 | 14.16 | 33.521 | 33.521 | P-1 |
| | H₃BTC 0.69 mmol | | | | | | | | |
| Mn(hfac)₂ (O₂CC₆H₅) | Mn(Ac)₂•4H₂O 0.46 mmol | ether | 90 | 95.32 | 90 | 9.572 | 17.162 | 14.041 | C2/c |
| | Hfac 0.92 mmol | | | | | | | | |
| | bipyridine 0.46 mmol | | | | | | | | |
| BPR43G2 | Zn(NO₃)₂•6H₂O 0.0288 mmol | DMF CH₃CN | 90 | 91.37 | 90 | 17.96 | 6.38 | 7.19 | C2/c |
| | H₂BDC 0.0072 mmol | | | | | | | | |
| BPR48A2 | Zn(NO₃)₂ 6H₂O 0.012 mmol | DMSO toluene | 90 | 90 | 90 | 14.5 | 17.04 | 18.02 | Pbca |
| | H₂BDC 0.012 mmol | | | | | | | | |
| BPR49B1 | Zn(NO₃)₂ 6H₂O 0.024 mmol | DMSO methanol | 90 | 91.172 | 90 | 33.181 | 9.824 | 17.884 | C2/c |
| | H₂BDC 0.048 mmol | | | | | | | | |
| BPR56E1 | Zn(NO₃)₂ 6H₂O 0.012 mmol | DMSO n-propa- | 90 | 90.096 | 90 | 14.587 3 | 14.153 | 17.183 | P2(1)/n |
| | H₂BDC 0.024 mmol | nol | | | | | | | |
| BPR68D10 | Zn(NO₃)₂ 6H₂O 0.0016 mmol | DMSO benzene | 90 | 95.316 | 90 | 10.062 7 | 10.17 | 16.413 | P2(1)/c |
| | H₃BTC 0.0064 mmol | | | | | | | | |
| BPR69B1 | Cd(NO₃)₂ 4H₂O 0.0212 mmol | DMSO | 90 | 98.76 | 90 | 14.16 | 15.72 | 17.66 | Cc |
| | H₂BDC 0.0428 mmol | | | | | | | | |

| | | | | | | | | | |
|---|---|---|---|---|---|---|---|---|---|
| BPR73E4 | Cd(NO₃)₂ 4H₂O 0.006 mmol | DMSO toluene | 90 | 92.324 | 90 | 8.7231 | 7.0568 | 18.438 | P2(1)/n |
| | H₂BDC 0.003 mmol | | | | | | | | |
| BPR76D5 | Zn(NO₃)₂ 6H₂O 0.0009 mmol | DMSO | 90 | 104.17 | 90 | 14.419 1 | 6.2599 | 7.0611 | Pc |
| | H₂BzPDC 0.0036 mmol | | | | | | | | |
| BPR80B5 | Cd(NO₃)₂•4H₂O 0.018 mmol | DMF | 90 | 115.11 | 90 | 28.049 | 9.184 | 17.837 | C2/c |
| | H₂BDC 0.036 mmol | | | | | | | | |
| BPR80H5 | Cd(NO₃)₂ 4H₂O 0.027 mmol | DMF | 90 | 119.06 | 90 | 11.474 6 | 6.2151 | 17.268 | P2/c |
| | H₂BDC 0.027 mmol | | | | | | | | |
| BPR82C6 | Cd(NO₃)₂ 4H₂O 0.0068 mmol | DMF | 90 | 90 | 90 | 9.7721 | 21.142 | 27.77 | Fdd2 |
| | H₂BDC 0.202 mmol | | | | | | | | |
| BPR86C3 | Co(NO₃)₂ 6H₂O 0.0025 mmol | DMF | 90 | 90 | 90 | 18.344 9 | 10.031 | 17.983 | Pca2(1) |
| | H₂BDC 0.075 mmol | | | | | | | | |
| BPR86H6 | Cd(NO₃)₂·6H₂O 0.010 mmol | DMF | 80.98 | 89.69 | 83.412 | 9.8752 | 10.263 | 15.362 | P-1 |
| | H₂BDC 0.010 mmol | | | | | | | | |
| | Co(NO₃)₂ 6H₂O | NMP | 106.3 | 107.63 | 107.2 | 7.5308 | 10.942 | 11.025 | P1 |
| BPR95A2 | Zn(NO₃)₂ 6H₂O 0.012 mmol | NMP | 90 | 102.9 | 90 | 7.4502 | 13.767 | 12.713 | P2(1)/c |
| | H₂BDC | | | | | | | | |
| | 0.012 mmol | | | | | | | | |
| CuC₆F₄O₄ | Cu(NO₃)₂•2.5H₂O 0.370 mmol | DMF chloro benzene | 90 | 98.834 | 90 | 10.967 5 | 24.43 | 22.553 | P2(1)/n |
| | H₂BDC(OH) ₂ 0.37 mmol | | | | | | | | |
| Fe formic | FeCl₂•4H₂O 0.370 mmol | DMF | 90 | 91.543 | 90 | 11.495 | 9.963 | 14.48 | P2(1)/n |
| | formic acid 0.37 mmol | | | | | | | | |
| Mg formic | Mg(NO₃)₂•6H₂O 0.370 mmol | DMF | 90 | 91.359 | 90 | 11.383 | 9.932 | 14.656 | P2(1)/n |
| | formic acid 0.37 mmol | | | | | | | | |
| MgC₆H₄O₆ | Mg(NO₃)₂•6H₂O 0.370 mmol | DMF | 90 | 96.624 | 90 | 17.245 | 9.943 | 9.273 | C2/c |
| | H₂BDC(OH) ₂ 0.37 mmol | | | | | | | | |
| Zn C₂H₄BDC MOF-38 | ZnCl₂ 0.44 mmol | DMF | 90 | 94.714 | 90 | 7.3386 | 16.834 | 12.52 | P2(1)/n |
| | CBBDC 0.261 mmol | | | | | | | | |
| MOF-49 | ZnCl₂ 0.44 mmol | DMF CH₃CN | 90 | 93.459 | 90 | 13.509 | 11.984 | 27.039 | P2/c |
| | m-BDC 0.261 mmol | | | | | | | | |
| MOF-26 | Cu(NO₃)₂•5H₂O 0.084 mmol | DMF | 90 | 95.607 | 90 | 20.879 7 | 16.017 | 26.176 | P2(1)/n |
| | DCPE 0.085 mmol | | | | | | | | |

| | | | | | | | | | |
|---|---|---|---|---|---|---|---|---|---|
| MOF-112 | Cu(NO₃)₂•2.5H₂O 0.084 mmol | DMF ethanol | 90 | 107.49 | 90 | 29.324 1 | 21.297 | 18.069 | C2/c |
| | *o*-Br-*m*-BDC 0.085 mmol | | | | | | | | |
| MOF-109 | Cu(NO₃)₂•2.5H₂O 0.084 mmol | DMF | 90 | 111.98 | 90 | 23.880 1 | 16.834 | 18.389 | P2(1)/c |
| | KDB 0.085 mmol | | | | | | | | |
| MOF-111 | Cu(NO₃)₂•2.5H₂O 0.084 mmol | DMF ethanol | 90 | 102.16 | 90 | 10.676 7 | 18.781 | 21.052 | C2/c |
| | o-BrBDC 0.085 mmol | | | | | | | | |
| MOF-110 | Cu(NO₃)₂•2.5H₂O 0.084 mmol | DMF | 90 | 90 | 120 | 20.065 2 | 20.065 | 20.747 | R-3/m |
| | thiophenedicarboxylic acid 0.085 mmol | | | | | | | | |
| MOF-107 | Cu(NO₃)₂•2.5H₂O 0.084 mmol | DEF | 104.8 | 97.075 | 95.206 | 11.032 | 18.067 | 18.452 | P-1 |
| | thiophenedicarboxylic acid | | | | | | | | |
| | 0.085 mmol | | | | | | | | |
| MOF-108 | Cu(NO3)2•2.5H2O 0.084 mmol | DBF/ methanol | 90 | 113.63 | 90 | 15.474 7 | 14.514 | 14.032 | C2/c |
| | thiophenedicarboxylic acid 0.085 mmol | | | | | | | | |
| MOF-102 | Cu(NO3)2•2.5H2O 0.084 mmol | DMF | 91.63 | 106.24 | 112.01 | 9.3845 | 10.794 | 10.831 | P-1 |
| | H2(BDCCI2) 0.085 mmol | | | | | | | | |
| Clbdc1 | Cu(NO3)2•2.5H2O 0.084 mmol | DEF | 90 | 105.56 | 90 | 14.911 | 15.622 | 18.413 | P-1 |
| | H2(BDCCI2) 0.085 mmol | | | | | | | | |
| Cu(NMOP) | Cu(NO3)2•2.5H2O 0.084 mmol | DMF | 90 | 102.37 | 90 | 14.923 8 | 18.727 | 15.529 | P2(1)/m |
| | NBDC 0.085 mmol | | | | | | | | |
| Tb(BTC) | Tb(NO3)3•5H2O 0.033 mmol | DMF | 90 | 106.02 | 90 | 18.698 6 | 11.368 | 19.721 | |
| | H3BTC 0.033 mmol | | | | | | | | |
| Zn3(BTC)2 Honk | ZnCl2 0.033 mmol | DMF ethanol | 90 | 90 | 90 | 26.572 | 26.572 | 26.572 | Fm-3m |
| | H3BTC 0.033 mmol | | | | | | | | |
| Zn4O(NDC) | Zn(NO3)2•4H2O 0.066 mmol | DMF ethanol | 90 | 90 | 90 | 41.559 4 | 18.818 | 17.574 | aba2 |
| | 14NDC 0.066 mmol | | | | | | | | |
| CdTDC | Cd(NO3)2•4H2O 0.014 mmol | DMF H2O | 90 | 90 | 90 | 12.173 | 10.485 | 7.33 | Pmma |
| | thiophene 0.040 mmol | | | | | | | | |
| | DABCO 0.020 mmol | | | | | | | | |
| IRMOF-2 | Zn(NO3)2•4H2O 0.160 mmol | DEF | 90 | 90 | 90 | 25.772 | 25.772 | 25.772 | Fm-3m |
| | o-Br-BDC 0.60 mmol | | | | | | | | |
| IRMOF-3 | Zn(NO3)2•4H2O 0.20 mmol | DEF ethanol | 90 | 90 | 90 | 25.747 | 25.747 | 25.747 | Fm-3m |
| | H2N-BDC 0.60 mmol | | | | | | | | |
| IRMOF-4 | Zn(NO3)2•4H2O 0.11 mmol | DEF | 90 | 90 | 90 | 25.849 | 25.849 | 25.849 | Fm-3m |
| | [C3H7O]2-BDC 0.48 mmol | | | | | | | | |
| IRMOF-5 | Zn(NO3)2•4H2O 0.13 mmol | DEF | 90 | 90 | 90 | 12.882 | 12.882 | 12.882 | Pm-3m |
| | [C5H11O]2-BDC 0.50 mmol | | | | | | | | |
| IRMOF-6 | Zn(NO3)2•4H2O 0.20 mmol | DEF | 90 | 90 | 90 | 25.842 | 25.842 | 25.842 | Fm-3m |
| | [C2H4]-BDC 0.60 mmol | | | | | | | | |
| IRMOF-7 | Zn(NO3)2•4H2O 0.07 mmol | DEF | 90 | 90 | 90 | 12.914 | 12.914 | 12.914 | Pm-3m |
| | 1,4NDC 0.20 mmol | | | | | | | | |
| IRMOF-8 | Zn(NO3)2•4H2O 0.55 mmol | DEF | 90 | 90 | 90 | 30.092 | 30.092 | 30.092 | Fm-3m |
| | 2,6NDC 0.42 mmol | | | | | | | | |
| IRMOF-9 | Zn(NO3)2•4H2O 0.05 mmol | DEF | 90 | 90 | 90 | 17.147 | 23.322 | 25.255 | Pnnm |
| | BPDC 0.42 mmol | | | | | | | | |
| IRMOF-10 | Zn(NO3)2•4H2O 0.02 mmol | DEF | 90 | 90 | 90 | 34.281 | 34.281 | 34.281 | Fm-3m |
| | BPDC 0.012 mmol | | | | | | | | |
| IRMOF-11 | Zn(NO3)2•4H2O 0.05 mmol | DEF | 90 | 90 | 90 | 24.822 | 24.822 | 56.734 | R-3m |
| | HPDC 0.20 mmol | | | | | | | | |
| IRMOF-12 | Zn(NO3)2•4H2O 0.017 mmol | DEF | 90 | 90 | 90 | 34.281 | 34.281 | 34.281 | Fm-3m |
| | HPDC 0.12 mmol | | | | | | | | |

| | | | | | | | | | |
|---|---|---|---|---|---|---|---|---|---|
| IRMOF-13 | Zn(NO₃)₂•4H₂O 0.048 mmol | DEF | 90 | 90 | 90 | 24.822 | 24.822 | 56.734 | R-3m |
| | PDC 0.31 mmol | | | | | | | | |
| IRMOF-14 | Zn(NO₃)₂•4H₂O 0.17 mmol | DEF | 90 | 90 | 90 | 34.381 | 34.381 | 34.381 | Fm-3m |
| | PDC 0.12 mmol | | | | | | | | |
| IRMOF-15 | Zn(NO₃)₂•4H₂O 0.063 mmol | DEF | 90 | 90 | 90 | 21.459 | 21.459 | 21.459 | Im-3m |
| | TPDC 0.025 mmol | | | | | | | | |
| IRMOF-16 | Zn(NO₃)₂•4H₂O 0.0126 mmol | DEF NMP | 90 | 90 | 90 | 21.49 | 21.49 | 21.49 | Pm-3m |
| | TPDC 0.05 mmol | | | | | | | | |

- ADC: Acetylenedicarboxylic acid
- NDC: Naphthalenedicarboxylic acid
- BDC: Benzenedicarboxylic acid
- ATC: Adamantanetetracarboxylic acid
- BTC: Benzenetricarboxylic acid
- BTB: Benzenetribenzoic acid
- MTB: Methanetetrabenzoic acid
- ATB: Adamantanetetrabenzoic acid
- ADB: Adamantanedibenzoic acid

Further metal-organic frameworks are MOF-2 to 4, MOF-9, MOF-31 to 36, MOF-39, MOF-69 to 80, MOF103 to 106, MOF-122, MOF-125, MOF-150, MOF-177, MOF-178, MOF-235, MOF-236, MOF-500, MOF-501, MOF-502, MOF-505, IRMOF-1, IRMOF-61, IRMOP-13, IRMOP-51, MIL-17, MIL-45, MIL-47, MIL-53, MIL-59, MIL-60, MIL-61, MIL-63, MIL-68, MIL-79, MIL-80, MIL-83, MIL-85, CPL-1 to 2, SZL-1, which are described in the literature.

Particularly preferred metal-organic frameworks are MIL-53, Zn-tBu-isophthalic acid, Al-BDC, MOF-5, MOF-177, MOF-505, IRMOF-8, IRMOF-11, Cu-BTC, Al-NDC, Al-aminoBDC, Cu-BDC-TEDA, Zn-BDC-TEDA, Al-BTC, Cu-BTC, Al-NDC, Mg-NDC, Al-fumarate, Zn-2-methylimidazolate, Zn-2-aminoimidazolate, Cu-biphenyldicarboxylate-TEDA, MOF-74, Cu-BPP, Sc-terephthalate. Greater preference is given to Sc-terephthalate, Cu-BTC, Al-BDC, Al-aminoBDC and Al-BTC. Very particular preference is given to Al-aminoBDC.

Al-amino BDC (Al-2-aminoterephthalic acid MOF) can be prepared according to WO 2008/142059 A1.

Apart from the conventional method of preparing the MOFs, as described, for example, in US 5,648,508, these can also be prepared by an electrochemical route. In this respect, reference is made to DE-A 103 55 087 and WO-A 2005/049892. The metal-organic frameworks prepared in this way have particularly good properties with regard to the adsorption and desorption of chemical substances, in particular gases.

Regardless of the method of preparation, the metal-organic framework is generally obtained in pulverulent or crystalline form. The metal-organic framework can also be converted into a shaped body and used in this form according to the present invention.

The contacting of the polyurethane prepolymer with the porous material can be carried out by simple mixing. No particular requirements are associated with the contacting. The porous material can be dried before contacting. Preferably, conditions for allowing chemical reaction with the residual monomeric isocyanate are standard conditions, i.e. no elevated pressure, stirring or shaking and room temperature or elevated temperatures. With regard to temperature, the polyurethane prepolymer is contacted at a temperature allowing chemical reaction of the reactive functional groups with the residual monomeric isocyanate, wherein the polyurethane prepolymer is liquid (as defined in claim 1) at the temperature. It is known that amino groups spontaneously react with the isocyanate functional group to yield a urea group.

The polyurethane prepolymer according to the present invention has the same or very similar characteristics properties as the prepolymer before contacting with the porous material and can be used in the same fields mentioned above.

However, it is also possible to remove the porous material after contacting by separation, e.g. filtration. Optionally, a second and further contacting with porous material after separation is possible in order to further remove residual monomeric isocyanate.

The following examples further illustrate the invention.

### EXAMPLES

### 1. Raw materials

### Isocyanate prepolymer 1:

The prepolymer was prepared by charging 261 g of toluene diisocyanate (TDI) with a ratio of 2,4-TDI:2,6-TDI=80:20 and 0.1 g Diglycol-bis-chloroformiat (DIBIS) into a stirred four-necked flask under nitrogen blanket, heating to 60 °C and slowly adding 739 g of poly(tetramethylene ether glycol) with an OH value of 112 mg KOH/g. The reaction mixture was stirred for 2 hours at 80 °C. After cooling down to room temperature, the isocyanate prepolymer was stored at room temperature in a sealed PE bottle free of moisture. NCO content was 6.09%, free monomer content was 0.4% 2,4-TDI and 2.1% 2,6-TDI and the viscosity was determined as 11.4 Pas at 25 °C.

### Isocyanate prepolymer 2:

The prepolymer was prepared by charging 320 g of methylene diphenyl diisocyanate (MDI) with a ratio of 4,4'-MDI:2,4'-MDI:2,2'-MDI=1:1:0.05 and 0.1 g Diglycol-bis-chloroformiat (DIBIS) into a stirred four-necked flask under nitrogen blanket, heating to 60 °C and adding 679.9 g of poly(propylene glycol) with an OH value of 104 mg KOH/g. The reaction mixture was stirred for 2 hours at 80 °C. After cooling down to room temperature, the isocyanate prepolymer was stored at room temperature in a sealed PE bottle free of moisture. NCO content was 5.27%, free monomer content was 2.1% 4,4'-MDI, 4.7% 2,4'-MDI and 0.4% 2,2'-MDI and the viscosity was determined as 2.8 Pas at 60 °C.

### Basolite A 100:

Metal-organic framework (MOF) based of aluminum terephthalate with MIL-53 structure from BASF.

### Basolite A 120:

Metal-organic framework (MOF) based of aluminum 2-aminoterephthalate prepared according to example 1 of WO 2008/142059 A1 .

### Aerosil R 504:

Fumed silica from EVONIK with (3-aminopropyl)trimethoxysilane surface functionalization and 125-175 m²/g BET surface area.

### Omyacarb 2T-AV:

Fine chalk powder from OMYA, composition is 97,5% calcium carbonate and <2% magnesium carbonate.

2-Ethyl-1-hexanol: Purity >99% from Sigma-Aldrich.

### Purolite A110:

Ion exchange resin from PUROLITE based on spherical beads (300-1200 µm) of microporous polystyrene crosslinked with divinylbenzene. Surface functionalized with primary amines.

### Lewatit VP OC 1065:

Ion exchange resin from LANXESS based on a microporous polystyrene crosslinked with divinylbenzene in spherical bead form (300-1200 µm). Surface functionalized with benzylamine groups. 50 m²/g BET surface.

### Aerosil VPR 511:

Fumed silica from EVONIK with (3-aminopropyl)trimethoxysilane surface functionalization, 125-175 m²/g BET surface area.

### Mg-Dihydroxyterephthalate:

12 g of 2,5-dihydroxyterephthalic acid has been dissolved in 685 g N,N-dimethylformamide. To this solution 53.3 g magnesiumacetate-tetrahydrate have been added. The solution has been stirred for 2 hours at 20 °C. The solid was filtered off and washed with 150 ml N,N-dimethylformamide and 150 ml methanol, followed by 16 hours of hot extraction with methanol. The material was dried at 130°C for 16 hours. The BET surface area was determined with nitrogen adsorption and was found to be 1126 m²/g.

### Mg-Hydroxyterephthalate:

10 g of 2-hydroxyterephthalic acid has been dissolved in 634 g N,N-dimethylformamide. To this solution 49.3 g magnesiumacetate-tetrahydrate have been added. The solution has been stirred for 2 hours at 20 °C. The solid was filtered off and washed with 100 ml N,N-dimethylformamide and 100 ml methanol, followed by 16 hours of hot extraction with methanol. The material was dried at 130°C for 16 hours. The BET surface area was determined with nitrogen adsorption and was found to be 45.5 m²/g.

### Al-Dihydroxyterephthalate:

12.24 g of 2,5-dihydroxyterephthalic acid has been dissolved in 698.5 g N,N-dimethylformamide. To this solution 39.2 g basic aluminum-diacetate have been added. The solution has been stirred for 2 hours at 20 °C. The solid was filtered off and washed with 150 ml N,N-dimethylformamide and 150 ml methanol, followed by hot extraction with methanol for 16 hours. The material was dried at 130°C for 16 hours. The BET surface area was determined with nitrogen adsorption and was found to be 364 m²/g.

### Al-Hydroxyterphthalate:

9.5 g of 2-hydroxyterephthalic acid has been dissolved in 600 g N,N-dimethylformamide. To this solution 33.8 g basic aluminum-diacetate have been added. The solution has been stirred for 2 hours at 20 °C. The solid was filtered off and washed with 100 ml N,N-dimethylformamide and 100 ml methanol, followed by 16 hours of hot extraction with methanol. The material was dried at 130°C for 16 hours. The BET surface area was determined with nitrogen adsorption and was found to be 332 m²/g.

### 2. Analytical methods

The NCO content of prepolymers and prepolymer/absorbent mixtures was determined by back-titration of the respective samples derivatized with 1 molar n-butylamine solution in chlorobenzene using 1 molar hydrochloric acid.

The free isocyanate monomer content of prepolymers and prepolymer/absorbent mixtures was measured using high performance liquid chromatography (HPLC) with UV detection of samples derivatized with 1-(2-Piridyl)piperazine. This method was applied for MDI and TDI monomer determination.

The viscosity was determined with a Haake-Mars rheometer with plate-plate geometry in rotation and 1 mm gap width at a shear rate of 10 and 40 s⁻¹ at the given temperature.

### 3. Working Examples

All absorbents were dried under vacuo at 80 °C overnight before use. Lewatit VPOC 1065, Purolite A110 and Aerosil VPR 511 were dried under vacuo at 80 °C for an extended time of 3 days. The residual content of volatiles (mainly water) was determined gravimetrically with Sartorius MA30 moisture analyzed by heating the samples for 10 min at 120 °C. Residual moisture was 1.7% for Basolite A100, 2.6% for Basolite A120, 1.3% for Aerosil R 504, 0.1% for Omyacarb 2T-AV, 0.6% for Purolite A110, 0,8% for Lewatit VPOC 1065, 1.1% for Aerosil VPR 511, 4.0% for Mg-DHT, 4.3% for Mg-HT, 1.1% for Al-DHT and 1.8% for Al-HT. After drying the absorbents were directly used for the prepolymer/absorbent mixtures.

Typical preparation procedure: 47.5 g of isocyanate prepolymer was charged into a PE cup, closed with a lid and heated to 60 °C in a laboratory heating oven. 2.5 g of dried absorbent was added and homogenized with a Vollrath laboratory mixer. The mixtures with isocyanate prepolymer 1 were stored at 60 °C for 1 hour, those with isocyanate prepolymer 2 at 60 °C for 2 hours. After the thermal annealing the samples were stored in sealed glass vials at room temperature for another 24 hours. NCO content, viscosity and monomer content of the mixtures was determined.

The examples 1-12 were prepared following the above mentioned process and demonstrate the individual ability of TDI monomer capture for various absorbents. As shown in Table 1 the NCO values of the examples 1-12 decrease in the mixtures, from 6.09% of the untreated isocyanate prepolymer 1 to 4.47% as minimum. The initial TDI monomer content of 2.5% was reduced in all examples 1-12, however, only example 2 containing Basolite A 120 achieved a monomer content as low as 0.05%. This corresponds to a capture of 98% of the free TDI monomers and is significantly improved compared to the examples 1 and 3-12. At the same time the viscosity increased only moderately in example 2 from initially 11.4 (20 °C) Pas to 22.7 Pas (20 °C). The best performing comparison example 8, which achieved a TDI monomer content of 0.72%, exhibits a viscosity of 54.5 Pas (20 °C). These results demonstrate that Basolite A 120 very efficiently captures the TDI monomers to yield prepolymer mixtures with lower than 0,1% residual monomer while keeping the viscosity increase on a moderate level.

**Table 1. Examples 1-12 using isocyanate prepolymer 1 based on TDI.**

| **Example** | **Unit** | | **1** | **2** | **3*)** | **4*)** | **5*)** | **6*)** | **7*)** | **8*)** | **9** | **10** | **11** | **12** |
|---|---|---|---|---|---|---|---|---|---|---|---|---|---|---|
| Isocyanate prepolymer 1 | % | 100 | 95.000 | 95.000 | 95.000 | 95.000 | 97.787 | 95.000 | 95.000 | 95.000 | 95.00 | 95.00 | 95.00 | 95.00 |
| Basolite A 100 | % | | 5.000 | | | | | | | | | | | |
| Basolite A 120 | % | | | 5.000 | | | | | | | | | | |
| Aerosil R 504 | % | | | | 5.000 | | | | | | | | | |
| Omyacarb 2T-AV | % | | | | | 5.000 | | | | | | | | |
| 2-Ethyl-1-hexanol | % | | | | | | 2.213 | | | | | | | |
| Purolite A110 | % | | | | | | | 5.000 | | | | | | |
| Lewatit VP OC 1065 | % | | | | | | | | 5.000 | | | | | |
| Aerosil VPR 511 | % | | | | | | | | | 5.000 | | | | |
| Mg-DHT | % | | | | | | | | | | 5.00 | | | |
| Mg-HT | % | | | | | | | | | | | 5.00 | | |
| Al-DHT | % | | | | | | | | | | | | 5.00 | |
| Al-HT | % | | | | | | | | | | | | | 5.00 |
| NCO content | % | 6.09 | 5.52 | 4.78 | 5.52 | 5.69 | 5.39 | 5.86 | 5.70 | 4.47 | 5.43 | 5.59 | 5.32 | 5.46 |
| Total monomer content | % | 2.5 | 1.6 | 0.05 | 1.5 | 1.9 | 1.13 | 1.38 | 1.51 | 0.72 | 1.1 | 1.8 | 1.5 | 1.6 |
| 2.4-TDI content | % | 0.4 | 0.1 | 0.02 | 0.1 | 0.2 | 0.03 | 0.08 | 0.11 | 0.02 | 0.1 | 0.2 | 0.1 | 0.1 |
| 2.6-TDI content | % | 2.1 | 1.5 | 0.03 | 1.4 | 1.7 | 1.1 | 1.3 | 1.4 | 0.7 | 1.0 | 1.6 | 1.4 | 1.5 |
| Monomer reduction | el% | | -36 | -98 | -40 | -24 | -55 | -45 | -40 | -71 | -56 | -28 | -40 | -36 |
| Viscosity (25°C;10 s⁻¹) | Pas | 11.4 | 22.7 | 21.6 | 32.4 | 15.6 | 17.1 | 13.1 | 13.7 | 54.5 | 15.6 | 16.4 | 18.2 | 16.8 |
| Viscosity (25°C;40 s⁻¹) | Pas | 11.3 | 21.4 | 20.9 | 59.1 | 15.1 | 16.8 | 12.8 | 13.4 | 44.1 | 15.2 | 16.1 | 17.8 | 16.5 |

| | | | | | | | | | | | | | | |
|---|---|---|---|---|---|---|---|---|---|---|---|---|---|---|
| *) comparative example | | | | | | | | | | | | | | |

The same absorbents were tested in examples 13-24 with the MDI based isocyanate prepolymer 2 having a NCO value of 5.27% and a residual MDI monomer content of 7.2%. The NCO content could be reduced to 4.16% and residual MDI monomer content of 2.5% in example 14 which contains Basolite A 120; the performance of the other absorbents in example 13 and 15-24 was worse. These examples demonstrate that Basolite A 120 in example 14 has again the highest efficiency to capture MDI monomers which is in analogy to the TDI prepolymer examples 1-12.

**Table 2. Examples 13-24 using isocyanate prepolymer 2 based on MDI.**

| **Example** | **Unit** | | **13** | **14** | **15*)** | **16*)** | **17*)** | **18*)** | **19*)** | **20*)** | **21** | **22** | **23** | **24** |
|---|---|---|---|---|---|---|---|---|---|---|---|---|---|---|
| Isocyanate prepolymer 2 | % | 100 | 95.000 | 95.000 | 95.000 | 95.000 | 96.964 | 95.000 | 95.000 | 95.000 | 95.00 | 95.00 | 95.00 | 95.00 |
| Basolite A 100 | % | | 5.000 | | | | | | | | | | | |
| Basolite A 120 | % | | | 5.000 | | | | | | | | | | |
| Aerosil R 504 | % | | | | 5.000 | | | | | | | | | |
| Omyacarb 2T-AV | % | | | | | 5.000 | | | | | | | | |
| 2-Ethyl-1-hexanol | % | | | | | | 3.035 | | | | | | | |
| Purolite A110 | % | | | | | | | 5.000 | | | | | | |
| Lewatit VP OC 1065 | % | | | | | | | | 5.000 | | | | | |
| Aerosil VPR 511 | % | | | | | | | | | 5.000 | | | | |
| Mg-DHT | % | | | | | | | | | | 5.00 | | | |
| Mg-HT | % | | | | | | | | | | | 5.00 | | |
| Al-DHT | % | | | | | | | | | | | | 5.00 | |
| Al-HT | % | | | | | | | | | | | | | 5.00 |
| NCO content | % | 5.27 | 4.97 | 4.16 | 4.72 | 5.25 | 4.20 | 4.59 | 4.96 | 4.37 | 4.13 | 4.51 | 4.52 | 4.54 |
| Total monomer content | % | 7.2 | 5.2 | 2.5 | 5.5 | 6.2 | 3.7 | 4.7 | 5.5 | 4.5 | 4.2 | 6.0 | 5.3 | 5.3 |
| 2,2'-MDI content | % | 0.4 | 0.4 | 0.3 | 0.4 | 0.4 | 0.3 | 0.4 | 0.4 | 0.4 | 0.5 | 0.4 | 0.4 | 0.4 |
| 2,4'-MDI content | % | 4.7 | 3.5 | 2.1 | 3.7 | 4.1 | 2.6 | 3.2 | 3.7 | 3.1 | 2.8 | 4.0 | 3.6 | 3.6 |
| 4,4'-MDI content | % | 2.1 | 1.3 | 0.1 | 1.4 | 1.7 | 0.8 | 1.1 | 1.4 | 1.0 | 0.9 | 1.6 | 1.3 | 1.3 |
| Monomer reduction | rel% | | -28 | -65 | -24 | -14 | -49 | -35 | -24 | -38 | -42 | -17 | -26 | -26 |
| Viscosity (60°C;10 s⁻¹) | Pas | 2.8 | 6.5 | 6.9 | 12.3 | 4.5 | 5.3 | 4.0 | 4.0 | 9.9 | 4.6 | 5.1 | 5.1 | 4.9 |
| Viscosity (60°C;40 s⁻¹) | Pas | 2.8 | 5.9 | 6.1 | 12.0 | 4.2 | 5.1 | 3.9 | 3.9 | 9.4 | 4.4 | 4.8 | 5.0 | 4.7 |

| | | | | | | | | | | | | | | |
|---|---|---|---|---|---|---|---|---|---|---|---|---|---|---|
| *) comparative example | | | | | | | | | | | | | | |

Additionally to the MOF type absorbents the monomer removal using zeolites was also tested with isocyanate prepolymer 1 and isocyanate prepolymer 2.

Description of the raw materials:
Zeolite MU 0169: Deboronated beta, 42% Si / 0,05% B, BET 488 m²/g
Zeolite DY 43: HY, 718 m2/g
Zeolite CBV 100: NaY, SiO₂:Al₂O₃=5, 727 m²/g
Zeolite CBV 760: HY, SiO₂:Al₂O₃=60, 720 g/m²

### All zeolites were dried under vacuum at 80 °C overnight before use. After drying the absorbents were directly used for the prepolymer/absorbent mixtures. Typical preparation procedure: 47.5 g of isocyanate prepolymer 1 or 2 was charged into a PE cup, closed with a lid and heated to 60 °C in a laboratory heating oven. 2.5 g of dried absorbent was added and homogenized with a Vollrath laboratory mixer. The samples were filled into airtight glass vials and annealed as follows. Example 25 and 26 were annealed after 1 day for 3 hours at 60 °C and then stored for 3 days at room temperature before analysis. Example 27 and 28 were stored at 60 °C for 1 hour, then kept at room temperature for 6 days and additionally annealed for 2 hours at 60 °C, those with isocyanate prepolymer 2 at 60 °C for 2 hours. Example 29 and 30 were stored at room temperature for 14 days. Example 31 and 32 were stored at 60 °C for 1 hour, then kept at room temperature for 6 days and additionally annealed for 2 hours at 60 °C. NCO content was determined by titration, viscosity measured with a Brookfield viscosimeter with cone-plate geometry and monomer content was determined with a HPLC method as described earlier.

The results in Table 3 and 4 clearly demonstrate that the ability of the zeolites to capture the free isocyanate monomer from prepolymers is relatively low compared to the Basolite A 120 in example 2 and 14.

For some cases, e.g. example 27, 28, 31 and 32, the monomer content was not even determined since the measured NCO content of the mixture was so close to the theoretical NCO of the plain mixture. As the Basolite references show the drop of NCO content is an essential indicator for the removal of the monomeric isocyanate.

Furthermore, in Example 29 with Basolite A 120 and the MDI prepolymer 1 the monomer removal even takes place also at room temperature granting 14 days of storage time. No such results were obtained with zeolites even not at thermal annealing at 60 °C for 3 hours.

**Table 3. Examples 25-28 using zeolites and isocyanate prepolymer 1 based on TDI.**

| **Example** | **Unit** | | **25** | **26*)** | | **27*)** | **28*)** |
|---|---|---|---|---|---|---|---|
| Isocyanate prepolymer 1 | % | 100 | 95.0 | 95.0 | 100 | 95.0 | 95.0 |
| Basolite A 120 | % | | 5.0 | 0.000 | | | |
| Zeolite MU 0169 | % | | 0.000 | 5.0 | | | |
| Zeolite DY 43 | % | | 0.000 | 0.000 | | 5.0 | |
| Zeolite CBV 100 | % | | 0.000 | 0.000 | | | 5.0 |
| NCO content | % | 6.22 | 4.60 | 5.89 | 6.24 | 5.70 | 5.77 |
| Theor. NCO content for mixture | | - | 5.91 | 5.91 | - | 5.93 | 5.93 |
| Total monomer content | % | 2.8 | <0.1 | 2.2 | 2.5 | n/a | n/a |
| 2,4-TDI content | % | 0.5 | <0.1 | 0.3 | 0.3 | n/a | n/a |
| 2,6-TDI content | % | 2.3 | <0.1 | 1.9 | 2.2 | n/a | n/a |
| Monomer reduction | rel% | - | -96 | -21 | - | n/a | n/a |
| Viscosity (25°C), Brookfield | Pas | 11.4 | 21.8 | 15.2 | 10.8 | 14.4 | 16.2 |

| | | | | | | | |
|---|---|---|---|---|---|---|---|
| *) Comparative example | | | | | | | |

**Table 4. Examples 29-32 using zeolites isocyanate prepolymer 2 based on MDI.**

| **Example** | **Unit** | | **29** | **30*)** | **31*)** | **32*)** |
|---|---|---|---|---|---|---|
| Isocyanate prepolymer 2 | % | 100 | 95.0 | 95.0 | 95.0 | 95.0 |
| Basolite A 120 | % | | 5.0 | | | |
| Zeolite CBV 760 | % | | | 5.0 | | |
| Zeolite DY 43 | % | | | | 5.0 | |
| Zeolite CBV 100 | % | | | | | 5.0 |
| NCO content | % | 4.60 | 3.12 | 4.18 | 4.08 | 4.29 |
| Theor. NCO content for mixture | | - | 4.37 | 4.37 | 4.37 | 4.37 |
| Total monomer content | % | 5.7 | 0.8 | 4.4 | n/a | n/a |
| 2,4'-MDI+2,2'-MDI content | % | 0.3 | 0.7 | 3.5 | n/a | n/a |
| 4,4'-MDI content | % | 2.2 | 0.1 | 0.9 | n/a | n/a |
| Monomer reduction | rel% | - | -86 | -23 | n/a | n/a |
| Viscosity (60 °C), Brookfield | Pas | 3.9 | 6.8 | 4.9 | 7.1 | 7.0 |

| | | | | | | |
|---|---|---|---|---|---|---|
| *) comparative example | | | | | | |

### 4. Application tests in PU hot cast elastomers

The demonomerized isocyanate prepolymer 1 was prepared following the above described process in two mixing ratios: 95 wt% isocyanate prepolymer 1 with 5 wt% Basolite A120 and 97 wt% isocyanate prepolymer 1 with 3 wt% Basolite A 120. All three prepolymers including the untreated isocyanate prepolymer 1 were heated to 80 °C in a laboratory oven, the curing agent 3,5-Dimethylthio-toluenediamine was used at room temperature. Both components were charged in the given weight ratio into a PE container and homogenized using a SpeedMixer^{™} under vacuum for 20 sec at 1820 rpm. The reaction mixture was then poured into a preheated aluminum mold at 90 °C and post-cured for 24 hours at 90 °C. Mechanical testing included Shore A and D hardness (DIN ISO 7619-1), tensile strength and elongation at break with S2 test specimen (DIN 53504), tear strength with Graves geometry (DIN ISO 34-1, B), E modulus with S2 test specimen, compression set with 10% compression (DIN ISO 815-1) and abrasion (DIN ISO 4649).

The mechanical properties of the obtained hot cast elastomers are shown in Table 5. The mechanical performance of the elastomers with isocyanate prepolymer 1 with <0.1% TDI (example 34) or 0.3% TDI (example 35) remains below the reference (example 33) since the monomer was captured by the Basolite A 120 scavenger. The absence of isocyanate monomers leads to the situation that no hard segments can be formed which typically are strongly influencing the final mechanical properties in polyurethane elastomers. However, this observation is well known for monomer-free prepolymers used for polyurethane elastomers independent of the method of demonomerization. The examples 34-35 illustrate that prepolymers which were demonomerized with Basolite A 120 can be processed and used for hot cast elastomer applications.

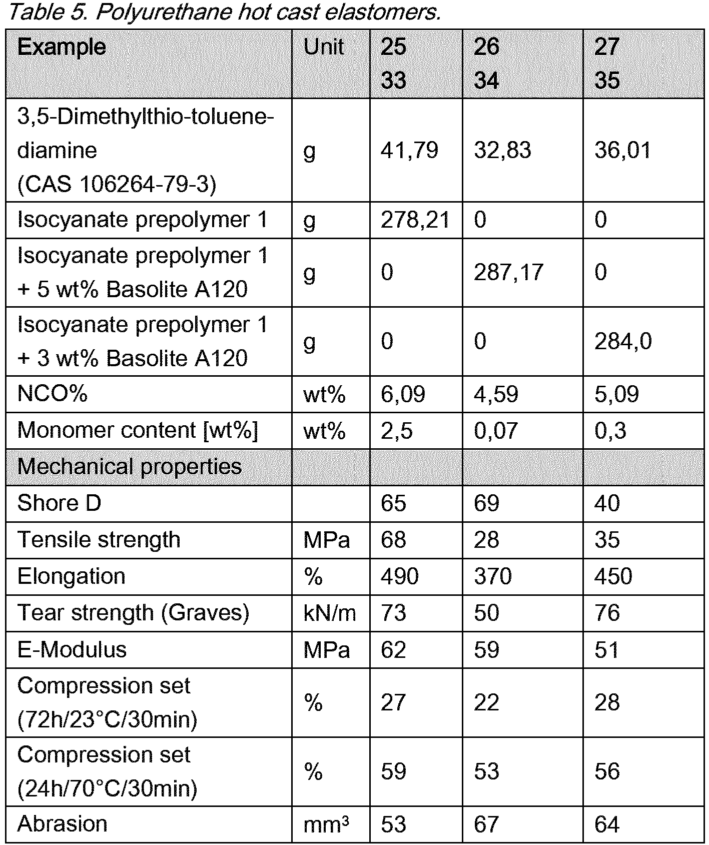

## Claims

1. A process for the reduction of the content of residual monomeric isocyanate in a polyurethane prepolymer containing said residual monomeric isocyanate comprising the step of
(i) contacting the polyurethane prepolymer with a porous material having pores formed by a framework containing isocyanate reactive functional groups at a temperature allowing chemical reaction of the reactive functional groups with the residual monomeric isocyanate in at least a fraction of the pores in order to covalently bind the reacted isocyanate, wherein the porous material is a porous metal-organic framework material comprising at least one metal ion and at least one at least bidentate organic compound, which is coordinately bound to said metal ion, wherein the polyurethane prepolymer is liquid with a viscosity in the range from 0.1 to 10⁷ mPas, determined with a Haake-Mars rheometer with plate-plate geometry in rotation and 1 mm gap width at a shear rate of 10 and 40 s⁻¹ at the temperature and wherein the ratio (w:w) of polyurethane prepolymer to porous material is in the range of from 100:0.1 to 100:50.

2. The process of claim 1, wherein the residual monomeric isocyanate is an aromatic or aliphatic isocyanate.

3. The process of claim 1 or 2, wherein the porous material has before the contacting a mean pore size in the range from 0.35 to 2.1 nm according to DIN ISO 9277:2014-01.

4. The process of any of claims 1 to 3, wherein the porous material has before the contacting a pore volume is in the range from 0.04 to 1.7 cm³/g according to DIN ISO 9277:2014-01.

5. The process of any of claims 1 to 4, wherein the porous material has before the contacting a specific surface area BET from 10 to 5700 m²/g according to DIN ISO 9277:2014-01.

6. The process of any of claims 1 to 5, wherein isocyanate reactive functional groups are amino, hydroxyl, thiol, epoxy or a mixture of two or more of these groups, preferably amino groups, more preferably primary amino groups.

7. The process of any of claims 1 to 6, wherein the ratio (w:w) of polyurethane prepolymer to porous material is in the range of from 100:0.1 to 100:20, preferably 100:0.1 to 100:10, more preferably 100:0.1 to 100:5.

8. The process of any of claims 1 to 7, wherein the residual monomer isocyanate content of the polyurethane prepolymer is reduced by at least 50 %, preferably by at least 90%, more preferably by at least 95%, even more preferably by at least 99 % in step (i).

9. The process of any of claims 1 to 8, wherein the porous metal-organic framework material comprising the at least one metal ion and the at least one at least bidentate organic compound, which is coordinately bound to said metal ion is prepared by contacting the at least one metal ion with the at least one at least bidentate organic compound and wherein the at least one at least bidentate organic compound contains the isocyanate reactive functional groups.

10. The process of any of claims 1 to 9, wherein the at least one metal ion is a metal ion of a metal selected from the group consisting of Mg, Ca, Sr, Ba, Sc, Y, Ln, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Tl, Si, Ge, Sn, Pb, As, Sb, Bi, and mixtures thereof ND wherein Ln represents a lanthanide, preferably Mg, Al, Y, Sc, Zr, Ti, V, Cr, Mo, Fe, Co, Cu, Ni, Zn, Ln, even more preferably Al, Mg, Fe, Cu and Zn, even more preferably Mg and Al, even more preferably Al.

11. The process of any of claims 1 to 10, wherein the at least one at least bidentate organic compound is derived from an amino polycarboxylic acid, preferably derived from an amino dicarboxylic acid, even more preferably derived from 2-aminoterephthalic acid.

## Patentansprüche

1. Verfahren zur Verringerung des Gehalts an restlichem monomerem Isocyanat in einem Polyurethanprepolymer, das das restliche monomere Isocyanat enthält, umfassend den Schritt des
(i) Inkontaktbringens des Polyurethanprepolymers mit einem porösen Material, das durch ein Gerüst, das isocyanatreaktive funktionelle Gruppen enthält, gebildete Poren aufweist, bei einer Temperatur, die eine chemische Reaktion der reaktiven funktionellen Gruppen mit dem restlichen monomeren Isocyanat in mindestens einem Teil der Poren ermöglicht, um das abreagierte Isocyanat kovalent zu binden, wobei es sich bei dem porösen Material um ein poröses metallorganisches Gerüstmaterial, das mindestens ein Metallion und mindestens eine koordinativ an das Metallion gebundene, mindestens zweizähnige organische Verbindung umfasst, wobei das Polyurethanprepolymer flüssig ist mit einer Viskosität im Bereich von 0,1 bis 10⁷ mPas, bestimmt mit einem Haake-Mars-Rheometer mit Platte-Platte-Geometrie in Rotation und 1 mm Spaltbreite bei einer Scherrate von 10 und 40 s⁻¹ bei der Temperatur, und wobei das Verhältnis (w:w) von Polyurethanprepolymer zu porösem Material im Bereich von 100:0,1 bis 100:50 liegt.

2. Verfahren nach Anspruch 1, wobei es sich bei dem restlichen monomeren Isocyanat um ein aromatisches oder aliphatisches Isocyanat handelt.

3. Verfahren nach Anspruch 1 oder 2, wobei das poröse Material vor dem Inkontaktbringen eine mittlere Porengröße im Bereich von 0,35 bis 2,1 nm gemäß DIN ISO 9277:2014-01 aufweist.

4. Verfahren nach einem der Ansprüche 1 bis 3, wobei das poröse Material vor dem Inkontaktbringen ein Porenvolumen im Bereich von 0,04 bis 1,7 cm³/g gemäß DIN ISO 9277:2014-01 aufweist.

5. Verfahren nach einem der Ansprüche 1 bis 4, wobei das poröse Material vor dem Inkontaktbringen eine spezifische BET-Oberfläche von 10 bis 5700 m²/g gemäß DIN ISO 9277:2014-01 aufweist.

6. Verfahren nach einem der Ansprüche 1 bis 5, wobei es sich bei den isocyanatreaktiven funktionellen Gruppen um Amino, Hydroxyl, Thiol, Epoxy oder eine Mischung von zwei oder mehr dieser Gruppen, vorzugsweise Aminogruppen, weiter bevorzugt primäre Aminogruppen, handelt.

7. Verfahren nach einem der Ansprüche 1 bis 6, wobei das Verhältnis (w:w) von Polyurethanprepolymer zu porösem Material im Bereich von 100:0,1 bis 100:20, vorzugsweise 100:0,1 bis 100:10, weiter bevorzugt 100:0,1 bis 100:5, liegt.

8. Verfahren nach einem der Ansprüche 1 bis 7, wobei der Gehalt an restlichem monomerem Isocyanat des Polyurethanprepolymers in Schritt (i) um mindestens 50 %, vorzugsweise um mindestens 90%, weiter bevorzugt um mindestens 95%, noch weiter bevorzugt um mindestens 99 %, verringert wird.

9. Verfahren nach einem der Ansprüche 1 bis 8, wobei das poröse metallorganische Gerüstmaterial, das mindestens ein Metallion und mindestens eine koordinativ an das Metallion gebundene, mindestens zweizähnige organische Verbindung umfasst, dadurch hergestellt wird, dass das mindestens eine Metallion mit der mindestens einen mindestens zweizähnigen organischen Verbindung in Kontakt gebracht wird, und wobei die mindestens eine mindestens zweizähnige organische Verbindung die isocyanatreaktiven funktionellen Gruppen enthält.

10. Verfahren nach einem der Ansprüche 1 bis 9, wobei es sich bei dem mindestens einen Metallion um ein Metallion eines Metalls handelt, das aus der Gruppe bestehend aus Mg, Ca, Sr, Ba, Sc, Y, Ln, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Tl, Si, Ge, Sn, Pb, As, Sb, Bi und Mischungen davon ND, wobei Ln für ein Lanthanid steht, vorzugsweise Mg, Al, Y, Sc, Zr, Ti, V, Cr, Mo, Fe, Co, Cu, Ni, Zn, Ln, noch weiter bevorzugt Al, Mg, Fe, Cu und Zn, noch weiter bevorzugt Mg und Al, noch weiter bevorzugt Al ausgewählt ist.

11. Verfahren nach einem der Ansprüche 1 bis 10, wobei sich die mindestens eine mindestens zweizähnige organische Verbindung von einer Aminopolycarbonsäure ableitet, vorzugsweise von einer Aminodicarbonsäure ableitet, noch weiter bevorzugt von 2-Aminoterephthalsäure ableitet.

## Revendications

1. Procédé de réduction de la teneur en monomère isocyanate résiduel dans un prépolymère de polyuréthane contenant ledit monomère isocyanate résiduel, comprenant l'étape consistant à
(i) mettre en contact le prépolymère de polyuréthane avec un matériau poreux ayant des pores formés par une structure contenant des groupes fonctionnels réactifs avec l'isocyanate, à une température permettant la réaction chimique de ces groupes fonctionnels avec le monomère isocyanate résiduel dans au moins une fraction des pores afin de lier de manière covalente l'isocyanate ayant réagi, le matériau poreux étant un matériau poreux à structure organométallique comprenant au moins un ion métallique et au moins un composé organique au moins bidenté, qui est lié par une liaison de coordination audit ion métallique, le prépolymère de polyuréthane étant liquide et présentant une viscosité comprise entre 0,1 et 10⁷ mPas, déterminée à l'aide d'un rhéomètre Haake-Mars à géométrie plan-plan en rotation et une largeur d'écartement de 1 mm, à un taux de cisaillement de 10 et 40 s⁻¹ à la température indiquée, et le rapport (p:p) du prépolymère de polyuréthane au matériau poreux étant compris entre 100:0,1 et 100:50.

2. Procédé selon la revendication 1, dans lequel le monomère isocyanate résiduel est un isocyanate aromatique ou aliphatique.

3. Procédé selon la revendication 1 ou 2, dans lequel le matériau poreux présente, avant la mise en contact, une taille de pores moyenne comprise entre 0,35 et 2,1 nm, selon DIN ISO 9277:2014-01.

4. Procédé selon l'une quelconque des revendications 1 à 3, dans lequel le matériau poreux présente, avant la mise en contact, un volume de pores compris entre 0,04 et 1,7 cm³/g, selon DIN ISO 9277:2014-01.

5. Procédé selon l'une quelconque des revendications 1 à 4, dans lequel le matériau poreux présente, avant la mise en contact, une surface spécifique comprise entre 10 et 5 700 m²/g, selon DIN ISO 9277:2014-01.

6. Procédé selon l'une quelconque des revendications 1 à 5, dans lequel les groupes fonctionnels réactifs avec l'isocyanate sont des groupes amino, hydroxyle, thiol, époxy ou un mélange d'au moins deux de ces groupes, de préférence des groupes amino, et plus préférentiellement des groupes amino primaires.

7. Procédé selon l'une quelconque des revendications 1 à 6, dans lequel le rapport (p:p) du prépolymère de polyuréthane au matériau poreux est compris entre 100:0,1 et 100:20, de préférence entre 100:0,1 et 100:10, et plus préférentiellement entre 100:0,1 et 100:5.

8. Procédé selon l'une quelconque des revendications 1 à 7, dans lequel la teneur en monomère isocyanate résiduel du prépolymère de polyuréthane est réduite d'au moins 50 %, de préférence d'au moins 90 %, plus préférentiellement d'au moins 95 %, encore plus préférentiellement d'au moins 99 % à l'étape (i).

9. Procédé selon l'une quelconque des revendications 1 à 8, dans lequel le matériau poreux à structure organométallique comprenant au moins un ion métallique et au moins un composé organique au moins bidenté, qui est lié par une liaison de coordination audit ion métallique, est préparé par mise en contact de l'ion métallique ou des ions métalliques avec le ou les composés organiques au moins bidentés, et dans lequel le ou les composés organiques au moins bidentés contiennent des groupes fonctionnels réactifs avec l'isocyanate.

10. Procédé selon l'une quelconque des revendications 1 à 9, dans lequel le ou les ions métalliques sont des ions métalliques d'un métal choisi dans le groupe constitué par Mg, Ca, Sr, Ba, Sc, Y, Ln, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Tl, Si, Ge, Sn, Pb, As, Sb, Bi, et des mélanges de ceux-ci ND, Ln représentant un lanthanide, de préférence Mg, Al, Y, Sc, Zr, Ti, V, Cr, Mo, Fe, Co, Cu, Ni, Zn, Ln, encore plus préférentiellement Al, Mg, Fe, Cu et Zn, encore plus préférentiellement Mg et Al, encore plus préférentiellement Al.

11. Procédé selon l'une quelconque des revendications 1 à 10, dans lequel le ou les composés organiques bidentés sont dérivés d'un acide polycarboxylique aminé, de préférence dérivés d'un acide dicarboxylique aminé, encore plus préférablement dérivés de l'acide 2-aminotéréphtalique.
